# EUROPEAN PATENT APPLICATION

(11) **EP 4 852 333 A1**
(43) Date of publication of application: **09.12.2026**
(21) Application number: 26701111.2
(22) Date of filing: 14.01.2026
(51) Int. Cl.: H04B 1/401, H04B 1/3827, H01Q 1/24, H04B 17/10

(54) **ELECTRONIC DEVICE AND METHOD FOR TRANSMITTING TRANSMISSION SIGNAL IN ELECTRONIC DEVICE**

(30) Priority: 14.04.2025 KR 20250048083; 05.06.2025 KR 20250073983
(71) Applicant: Samsung Electronics Co., Ltd., Suwon-si, Gyeonggi-do 16677 (KR)
(72) Inventor: CHO, Woosik, Suwon-si, Gyeonggi-do 16677 (KR); YE, Sangmin, Suwon-si, Gyeonggi-do 16677 (KR); SHIN, Seungshik, Suwon-si, Gyeonggi-do 16677 (KR); PARK, Sungchul, Suwon-si, Gyeonggi-do 16677 (KR); KWON, Soonheung, Suwon-si, Gyeonggi-do 16677 (KR)
(74) Representative: HGF
(86) International application number: PCT/KR2026/000835
(87) International publication number: WO 2026/221217

(57) **Abstract**

According to various embodiments, an operating method of an electronic device (102), which includes a sensing circuit (531, 532), an antenna (521, 522) configured to radiate a radio frequency (RF) signal, and a switch (510), may comprise identifying, through the sensing circuit, whether an object exists within a first distance. The operating method of the electronic device may comprise, based on identifying that the object does not exist within the first distance, controlling the switch to be connected to an antenna through a first RF path using a direct feeding. The operating method of the electronic device may comprise, based on identifying that the object exists within the first distance, controlling the switch to be connected to the antenna through a second RF path using a coupling feeding.

## Description

### [Technical Field]

Various embodiments of the disclosure relate to an electronic device and a method of transmitting a transmission signal in the electronic device.

### [Background Art]

Looking back on the process that has developed over the last several generations of wireless communication, a technology mainly targeting humans by providing services such as voice, multimedia, or data has been developed. Since the commercialization of long term evolution (LTE) and 5th-generation (5G) communication systems, various types of things have been connected to a communication network. Examples of the things connected to the communication network may include a vehicle, a robot, a drone, a home appliance, a display, a smart sensor installed in various infrastructures, construction machinery, or factory equipment. Mobile devices are expected to evolve into various form factors such as augmented reality glasses, virtual reality headsets, or holographic devices. Efforts are also being made to develop a 6th-generation (6G) communication system beyond the 5G communication system to provide various services by connecting hundreds of billions of devices and things.

In order to enhance frequency efficiency and improve a system network, for example, in the 6G communication system, various technologies have been developed, including a full duplex technology in which a uplink and a downlink simultaneously use the same frequency resource at the same time, a network technology that uses a satellite and high-altitude platform stations (HAPS) in an integrated way, a network structure innovation technology that supports a mobile base station and enables network operation optimization and automation, a dynamic spectrum sharing technology through collision avoidance based on spectrum use prediction, an artificial intelligence (AI)-based communication technology that utilizes AI from the design stage and internalizes an end-to-end AI support function to realize system optimization, and a next-generation distributed computing technology that realizes a service with a level of complexity that exceeds the limits of terminal computing capabilities by using a ultra-high-performance communication and a computing resource (e.g., mobile edge computing (MEC) or cloud). In addition, attempts are continuing to further strengthen connectivity between devices, further optimize a network, promote software of a network entity, and increase the openness of a wireless communication, for example, by designing a new protocol to be used in the 6G communication system, implementing a hardware-based security environment, developing a mechanism for safe use of data, and developing a technology for a method of maintaining privacy.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment, an electronic device may comprise a sensing circuit, an antenna configured to radiate a radio frequency (RF) signal, and a switch.

According to an embodiment, the electronic device may comprise memory storing instructions and comprising one or more storage media.

According to an embodiment, the electronic device may comprise at least one processor comprising processing circuitry.

According to an embodiment, the instructions, when executed by the at least one processor individually or collectively, may cause the electronic device to identify, through the sensing circuit, whether an object exists within a first distance.

According to an embodiment, the instructions, when executed by the at least one processor individually or collectively, may cause the electronic device to, based on identifying that the object does not exist within the first distance, control the switch to be connected to the antenna through a first RF path using a direct feeding.

According to an embodiment, the instructions, when executed by the at least one processor individually or collectively, may cause the electronic device to, based on identifying that the object exists within the first distance, control the switch to be connected to the antenna through a second RF path using a coupling feeding.

According to an embodiment, an operating method of an electronic device comprising a sensing circuit, an antenna configured to radiate a radio frequency (RF) signal, and a switch may comprise identifying, through the sensing circuit, whether an object exists within a first distance.

According to an embodiment, the operating method of the electronic device may comprise, based on identifying that the object does not exist within the first distance, controlling the switch to be connected to the antenna through a first RF path using a direct feeding.

According to an embodiment, the operating method of the electronic device may comprise, based on identifying that the object exists within the first distance, controlling the switch to be connected to the antenna through a second RF path using a coupling feeding.

According to an embodiment, a storage medium storing at least one computer-readable instruction may be provided.

According to an embodiment, the at least one instruction, when executed by at least one processor including processing circuitry of an electronic device individually or collectively, may cause the electronic device to perform at least one operation.

According to an embodiment, the at least one operation may comprise identifying, through a sensing circuit of the electronic device, whether an object exists within a first distance.

According to an embodiment, the at least one operation may comprise, based on identifying that the object does not exist within the first distance, controlling the switch to be connected to the antenna through a first RF path using a direct feeding.

According to an embodiment, the at least one operation may comprise, based on identifying that the object exists within the first distance, controlling the switch to be connected to the antenna through a second RF path using a coupling feeding.

According to an embodiment, an electronic device may comprise a communication circuit, an antenna configured to receive a transmission signal from the communication circuit through a first signal path or a second signal path, a sensing circuit configured to sense an external object, at least one processor comprising processing circuitry, and memory storing instructions and comprising one or more storage media.

According to an embodiment, the instructions, when executed by the at least one processor individually or collectively, may cause the electronic device to establish a communication connection with an external electronic device through the communication circuit.

According to an embodiment, the instructions, when executed by the at least one processor individually or collectively, may cause the electronic device to, in connection with the establishment of the communication connection, identify whether the external object is sensed through the sensing circuit.

According to an embodiment, the instructions, when executed by the at least one processor individually or collectively, may cause the electronic device to, based at least in part on identifying that the external object is not sensed, transfer the transmission signal to the antenna through the first signal path including a first feeding portion using a physical connection.

According to an embodiment, the instructions, when executed by the at least one processor individually or collectively, may cause the electronic device to, based at least in part on identifying that the external object is sensed, transfer the transmission signal to the antenna through the second signal path including a second feeding portion using a coupled connection.

According to an embodiment, an operating method of an electronic device may comprise establishing a communication connection with an external electronic device through a communication circuit.

According to an embodiment, the operating method of the electronic device may comprise, in connection with the establishment of the communication connection, determining whether an external object is sensed through a sensing circuit.

According to an embodiment, the operating method of the electronic device may comprise, based on at least part of identifying that the external object is not sensed, transferring a transmission signal an antenna through a first signal path including a first feeding portion using a physical connection.

According to an embodiment, the operating method of the electronic device may comprise, based on at least part of identifying that the external object is sensed, transferring the transmission signal to the antenna through a second signal path including a second feeding portion using a coupled connection.

According to an embodiment, a storage medium storing at least one computer-readable instruction may be provided.

According to an embodiment, the at least one instruction, when executed by at least one processor including processing circuitry of an electronic device individually or collectively, may cause the electronic device to perform at least one operation.

According to an embodiment, the at least one operation may comprise establishing a communication connection with an external electronic device through a communication circuit.

According to an embodiment, the at least one operation may comprise, in connection with the establishment of the communication connection, determining whether an external object is sensed through a sensing circuit of the electronic device.

According to an embodiment, the at least one operation may comprise, based on at least part of identifying that the external object is not sensed, transferring a transmission signal an antenna of the electronic device through a first signal path including a first feeding portion using a physical connection.

According to an embodiment, the at least one operation may comprise, based on at least part of identifying that the external object is sensed, transferring the transmission signal to the antenna through a second signal path including a second feeding portion using a coupled connection.

### [Description of the Drawings]

The same or similar reference denotations may be used to refer to the same or similar elements throughout the specification and the drawings.
FIG. 1 is a block diagram illustrating an electronic device in a network environment according to various embodiments.
FIG. 2A is a diagram for describing an electronic device according to an embodiment.
FIG. 2B is a diagram for describing disposition of a component within an electronic device according to an embodiment.
FIG. 3 is a graph illustrating a relationship between a power and a throughput according to various embodiments.
FIG. 4A is a diagram illustrating an absorbed power density (APD) according to an antenna feeding condition according to various embodiments.
FIG. 4B is a diagram illustrating an APD according to an antenna feeding condition according to various embodiments.
FIG. 5 is a block diagram illustrating an electronic device according to various embodiments.
FIG. 6 is a block diagram illustrating an electronic device according to various embodiments.
FIG. 7 is a block diagram illustrating an electronic device according to various embodiments.
FIG. 8 illustrates a flowchart for describing an operating method of an electronic device according to various embodiments.
FIG. 9 illustrates a flowchart for describing an operating method of an electronic device according to various embodiments.
FIG. 10 illustrates a flowchart for describing an operating method of an electronic device according to various embodiments.
FIG. 11A is a diagram for describing an operation according to a grip type of an electronic device according to various embodiments.
FIG. 11B is a diagram for describing an operation according to a grip type of an electronic device according to various embodiments.
FIG. 12 is a graph illustrating the overall radiation efficiency per frequency according to various embodiments.
FIG. 13A is a diagram illustrating a specific absorption rate (SAR) in direct feeding according to various embodiments.
FIG. 13B is a diagram illustrating a SAR in direct feeding according to various embodiments.
FIG. 13C is a diagram illustrating a SAR in coupling feeding according to various embodiments.

### [Mode for Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

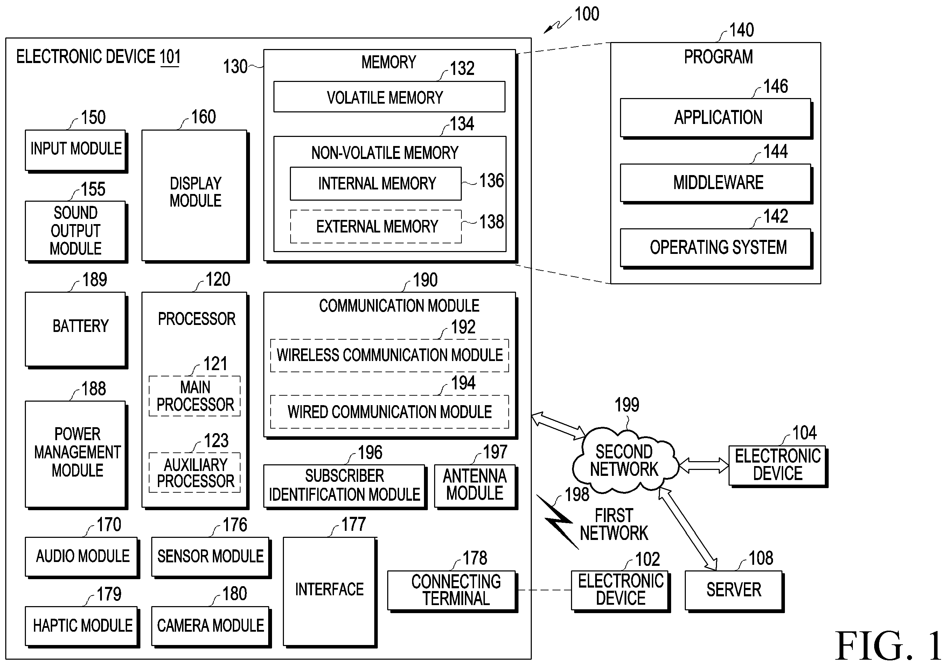

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may acquire the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{TM}, wireless-fidelity (WiFi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, the components easy to understand from the description of the above embodiments are denoted with or without the same reference numerals and their detailed description may be skipped. According to an embodiment of the disclosure, an electronic device may be implemented by selectively combining configurations of different embodiments, and the configuration of one embodiment may be replaced by the configuration of another embodiment. However, it is noted that the present invention is not limited to a specific drawing or embodiment.

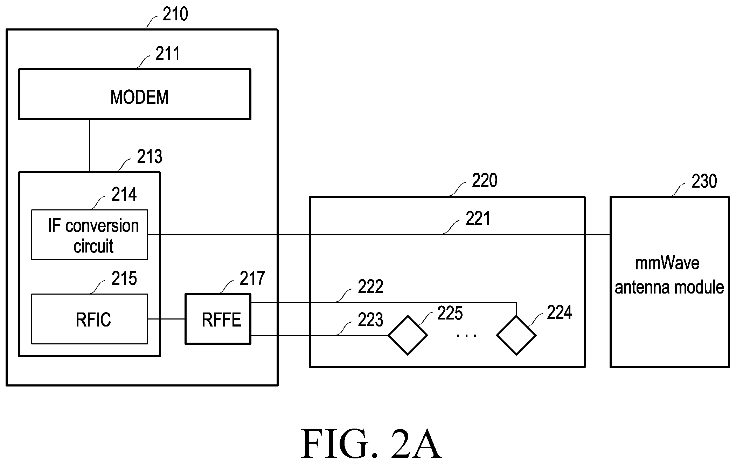

FIG. 2A is a diagram for describing an electronic device according to an embodiment.

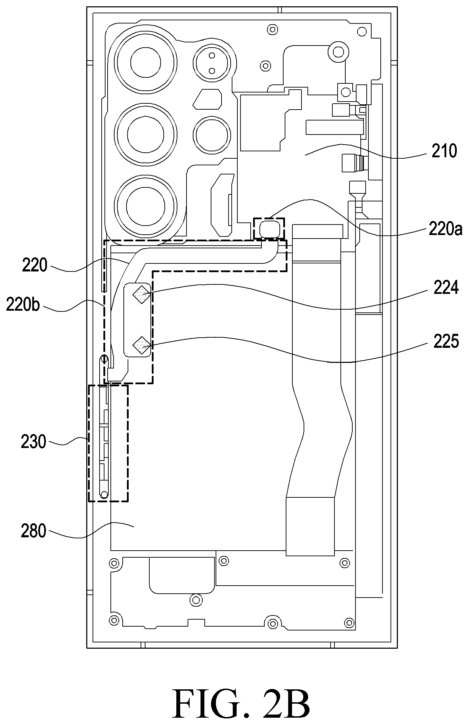

An embodiment in FIG. 2A will be described with reference to FIG. 2B.

FIG. 2B is a diagram for describing disposition of a component within an electronic device according to an embodiment.

According to an embodiment, an electronic device 101 may include a printed circuit board (PCB) 210, a flexible printed circuit board (FPCB) 220, and/or an mmWave antenna module 230.

According to an embodiment, a MODEM 211 (e.g., a communication module 190 in FIG. 1), an intermediate (IF)/radio frequency integrated circuit (RFIC) module 213, and/or a radio frequency front end (RFFE) 217 may be disposed on the PCB 210.

The modem 211 may provide a 5G communication baseband signal and/or a 6G communication baseband signal by performing modulation. The modem 211 may be implemented to support both a 5G communication and a 6G communication. Alternatively, the modem 211 may be implemented with a plurality of modems of a modem supporting the 5G communication and a modem supporting the 6G communication. The modem 211 may be configured to demodulate a received baseband signal.

The IF/RFIC module (213) is illustrated as including an IF conversion circuit (214) for the 5G communication and an RFIC (215) for the 6G communication in an embodiment in FIG. 2A, but this is exemplary, and those skilled in the art will understand that the IF conversion circuit (214) and the RFIC (215) for the 6G communication may be implemented as separate hardware. According to various embodiments, the IF conversion circuit 214 for the 5G communication may be omitted or an IF conversion circuit for the 6G communication may be added.

At least one of the MODEM 211, the IF/RFIC module 213, and the RFFE 217 may be referred to as a communication circuit. The IF/RFIC module 213 may correspond to a transceiver. Although the 5G communication and the 6G communication are described for convenience of a description, embodiments of the disclosure may be applied to cellular communication generations before 5G and after 6G, and various communication schemes (e.g., Wi-Fi, Bluetooth, and RFID) including a short-range high-speed communication.

The IF conversion circuit 214 may convert a 5G communication baseband signal into an intermediate frequency signal and output the intermediate frequency signal. If the 5G communication uses a frequency range (FR) 2, a frequency of the intermediate frequency signal may be included in a range of, for example, 7 GHz to 13 GHz, but is not limited. The IF conversion circuit 214 may convert a received intermediate frequency signal into a baseband signal and provide the MODEM 211 with the baseband signal. The RFIC 215 for the 6G communication may convert a 6G communication baseband signal into a 6G communication radio frequency (RF) signal. For example, a frequency of the 6G communication RF signal may be 7 GHz or 13 GHz, but is not limited. Accordingly, a frequency band of the intermediate frequency signal of the 5G communication and a frequency band of the 6G communication RF signal may at least partially overlap, or/or a difference thereof may be less than a threshold difference.

The RFFE 217 for the 6G communication may process the RF signal for the 6G communication provided from the RFIC 215 and provide it to each of antennas (e.g., patch antennas 224 and 225) for the 6G communication. For example, a patch antenna may be manufactured in a form of a rectangular or circular metal on a microstrip substrate to feed an RF signal. According to various embodiments, the patch antenna may include one or more patches serving as a radiator, one or more slots (e.g., an opening between the patches), a dielectric substrate on which the patch is disposed, a ground plane disposed to face the patch with the dielectric therebetween, and/or a feeding unit which provides a signal to the patch. A plurality of patch antennas may operate as directional antennas through beamforming. For example, the RFFE 217 may include a splitter for division into 6G communication RF signal lines 222 and 223 corresponding to each of patch antennas 224 and 225, a combiner for combining received RF signals, a power amplifier, a phase shifter, a low-noise amplifier, and/or a switch for transmission/reception path switching, but is not limited.

The mmWave antenna module 230 may convert an intermediate frequency signal provided through an intermediate frequency signal line 221 into an RF signal. The mmWave antenna module 230 may include, for example, a filter, an RF local oscillator (RF LO), a mixer, an internal-branch coupler, a serial I/F, a combiner/splitter, a phase shifter, a switch, a PA, an LNA, a coupler, and/or an antenna for the 5G communication, but is not limited. Accordingly, an RF signal for the 5G communication may be provided to an antenna for the 5G communication.

The patch antennas 224 and 225 for the 6G communication of the electronic device 101 according to various embodiments may be disposed on the FPCB 220.

The FPCB 220 may connect the PCB 210 to the mmWave antenna module 230 as in FIG. 2B, for example. For example, at least a portion of the FPCB 220 (e.g., an area in which the patch antennas 224 and 225 are disposed) may be disposed on a battery 280 (for example, may overlap with at least a portion of a battery in a thickness direction of the electronic device 101), but there is no limitation. According to an embodiment, the FPCB 220 may include a first area 220a and a second area 220b.

In FIG. 2B, the patch antennas 224 and 225 may be disposed on the second area 220b of the FPCB 220. The first area 220a may include a stiff area, and the second area 220b may include a flexible area and/or a stiff area. For example, the patch antennas 224 and 225 may be disposed in the stiff area of the second area 220b, but are not limited thereto. For example, stiffness of a stiff area may be greater than that of a flexible area. The first area 220a may be connected to, for example, the PCB 210. One side of the second area 220b may be connected to the first area 220a, and the other side of the second area 220b may be connected to the mmWave antenna module 230.

According to an embodiment, the mmWave antenna module 230 may be equipped with other patch antennas for the 5G communication.

According to an embodiment, the electronic device 101 may include at least one antenna (e.g., a patch antenna) for the 5G communication and/or the 6G communication on the PCB 210 or on an auxiliary circuit board connected to the PCB 210.

According to an embodiment, a housing, an antenna (e.g., a patch antenna) and/or a transmission power (e.g., power amount, a radiation shape, and a radiation direction) through the antenna of the electronic device 101 may be designed in consideration of impact of an electromagnetic wave on a human body. Considering the impact of the electromagnetic wave on the human body, each country stipulates a regulation (e.g., a specific absorption rate (SAR)) related to the impact of electromagnetic wave on the human body. For example, if a SAR measured in the electronic device exceeds a set criterion, impact on the human body may be reduced by performing power backoff. As a transmission power is reduced during a power backoff process by the SAR, a decrease in a transmission performance of the antenna may be occurred. The decrease in the transmission performance of the antenna may lead to a decrease in a coverage and a decrease in an uplink transmission rate (e.g., throughput), which may negatively affect an actual user experience.

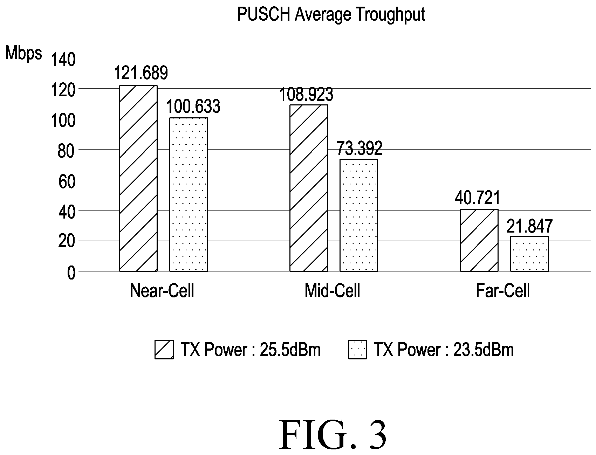

FIG. 3 is a graph illustrating a relationship between a power and a throughput according to various embodiments.

Referring to FIG. 3, as a transmission power is reduced from 25.5 dBm to 23.5 dBm at a near-cell location, average throughput of physical uplink shared channel (PUSCH) data may be reduced from 121.689 Mbps to 100.633 Mbps. As the transmission power is reduced from 25.5 dBm to 23.5 dBm at a mid-cell location, the average throughput of the PUSCH data may be reduced from 108.923 Mbps to 73.392 Mbps. As the transmission power is reduced from 25.5 dBm to 23.5 dBm at a far-cell location, the average throughput of the PUSCH data may be reduced from 40.721 Mbps to 21.847 Mbps. For example, if an electronic device reduces a transmission power due to power backoff caused by a SAR, the average throughput of uplink data (e.g., PUSCH) may be reduced even if the electronic device is located at any location (e.g., near, medium, or far) from a cell center, as illustrated in FIG. 3.

With the advancement of a communication technology, various communication access technologies are developed, and a wireless communication function is installed in various mobile devices such as a smartphone, a tablet, a smart watch, and a wireless earphone, the use of a frequency band above 6 GHz has been spread.

Table 1 below shows an example of a frequency band according to each communication technology.

**[Table 1]**

| Communication technology | Frequency band |
|---|---|
| LTE/5G(NR)/6G | 1.8GHz, 3.5GHz, 28GHz, 7/8GHz, 15GHz |
| Wi-Fi | 2.4GHz/5GHz, 6GHz or higher |
| BT | 2.4GHz, 5GHz/6GHz or higher |
| UWB | 6GHz ~ 10GHz |
| WPT | 150kHz, 6.78MHz |
| NFC | 13.56MHz |

According to an embodiment, 7.125 ~ 8.4GHz and 14.8 ~15.35GHz bands are considered as 6G communication bands. For a 6 GHz or more band considered as the 6G communication band, an absorbed power density (APD) standard has been stipulated as a regulation related to impact of an electromagnetic wave on a human body. For example, a criterion for limiting the APD may be applied in a 6G communication as an evaluation criterion for impact of a near-field electromagnetic wave on the human body for the electronic device used in proximity to the human body.

According to various embodiments, the above-described SAR regulation is applied in a frequency band below 6 GHz, and the APD regulation is applied in a frequency band above 6 GHz, so that the impact of the electromagnetic wave on the human body may be reduced. In the SAR regulation, the amount of energy absorbed by the human body tissue may be measured in watts per kilogram (W/kg), and in the APD regulation, a power density incident on the human body may be measured in milliwatt/square centimeters (mW/cm²) or watts/square meters (W/m²). The APD which evaluates the impact on a surface of the human body tissue may be relatively more affected by a near field performance of the antenna. In contrast, a transmission performance of the antenna may be relatively more affected by a far field performance.

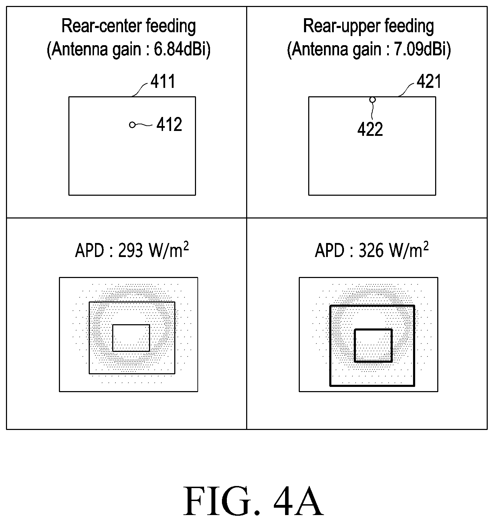

FIG. 4A is a diagram illustrating an APD according to an antenna feeding condition according to various embodiments.

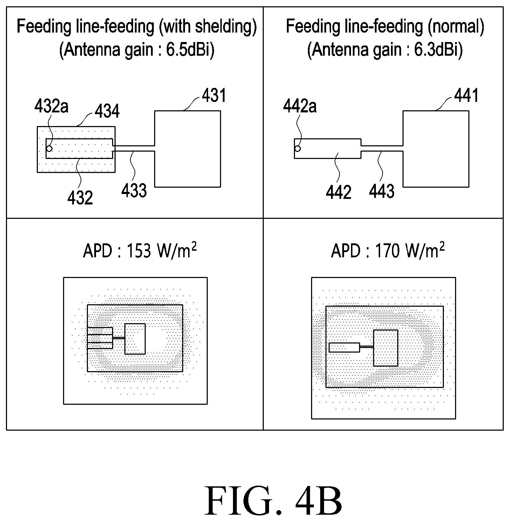

FIG. 4B is a diagram illustrating an APD according to an antenna feeding condition according to various embodiments.

Referring to FIG. 4A, if a feeding pad (or a feeding point) 412 is disposed at a center of a rear of a patch antenna 411 as shown above and below the left, an antenna gain may be 6.84dBi, and an APD may be 293W/m². If a feeding pad 422 is disposed at an upper of a rear of a patch antenna 421 as shown above and below the right, the antenna gain may be 7.09dBi, and the APD may be 326W/m². For example, as a location of a feeding pad (or a feeding point) is moved to the upper end, the antenna gain may increase, but the APD may increase.

Referring to FIG. 4B, a feeding pad 432 may be disposed through a feeding line 433 connected to a patch antenna 431 as shown above and below the left. The feeding pad 432 may include a feeding point 432a.

According to various embodiments, if a shielding member 434 is disposed (for example, covered) on the feeding pad 432 to shield it, an antenna gain may be 6.5dBi and an APD may be 153W/m². As shown above and below the right, a feeding pad 442 may be disposed through a feeding line 443 connected to a patch antenna 441. The feeding pad 442 may include a feeding point 442a.

According to various embodiments, if there is no shielding member on the feeding pad 442, the antenna gain may be 6.3dBi, and the APD may be 170W/m². For example, if the feeding pad 432 is shielded by the shielding member 434, the antenna gain may increase and the APD may decrease. In addition, comparing FIG. 4A in which a feeding unit (e.g., the feeding pads 412 and 422) is formed on a radiator (e.g., a patch) of the patch antennas 411 and 421 and FIG. 4B in which a radiator (e.g., a patch) of the patch antennas 431 and 441 and a feeding unit (e.g., a feeding pad) are spaced apart from each other, the APD may decrease at a greater ratio compared to an amount in which the antenna gain decrease as a distance between the radiator (e.g., the patch) and the feeding unit (e.g., the feeding pad) increases.

According to an embodiment, the antenna radiator and the feeding unit spaced apart from each other may be connected through a feeding line (e.g., a transmission line). According to an embodiment, the feeding unit may include an antenna-side feeding unit connected to the radiator through the feeding line and a transmission line-side feeding unit connected to an RFIC 215 through the transmission line. For example, the antenna-side feeding unit and the transmission line-side feeding unit may be spatially spaced apart to form indirect feeding (i.e., coupling feeding) in which a high-frequency signal is coupled and transferred. For example, each of the antenna-side feeding unit and the transmission line-side feeding unit may be formed of a conductive pad. For example, the antenna-side feeding unit and the transmission line-side feeding unit may provide current using at least one of electromagnetic induction or capacitive coupling.

According to an embodiment, the feeding unit (or a feeding portion) may have a wider width than the feeding line (e.g., an RF path, the transmission line, or a signal path). For example, the feeding line may include a microstrip line, a strip line, or a wave guide matched with a specific impedance value (e.g., 50 ohms). For example, the feeding unit may be formed of the conductive pad having a specific shape (e.g., a square, and a circle). For example, the feeding unit may be connected to at least one of circuit elements (e.g., a capacitor, an inductor, a resistor, or a ground) for impedance matching. For example, the feeding unit may be disposed at a location close to the circuit elements for impedance matching.

Various embodiments of the disclosure describe methods for selecting (or switching) an RF transmission path according to whether an object (e.g., a human body) exists in proximity, based on a difference between a near field performance and a far field performance according to a feeding scheme of the antenna. Each of the patch antennas 224 and 225 (e.g., the antenna radiator) may include, for example, a plurality of feeding points including a first feeding point and a second feeding point.

According to an embodiment, the first feeding point may correspond to a first feeding pad (or a first feeding unit) formed on the antenna radiator. The first feeding point may be connected to the RFIC 215 through a first RF path (or a first signal path). A transmission signal from the RFIC 215 may be directly provided (i.e., directly fed) to the antenna radiator through the first feeding point. For example, a current density of the transmission signal on the first RF path may be highest at the first feeding point formed on the antenna radiator.

According to an embodiment, the second feeding point formed on the antenna radiator may be connected to a second feeding pad (or a second feeding unit) spaced apart from the antenna radiator through the feeding line (e.g., the transmission line). The second feeding point may be connected to the RFIC 215 through a second RF path (or a second signal path) different from the first RF path. For example, a current density of a transmission signal on the second RF path may be highest at the second feeding pad spaced apart from the antenna radiator. Compared to the first feeding point, the second feeding pad may be farther from an APD measurement location. As the second feeding pad is spaced apart from the antenna radiator, amount of deterioration in the far field performance of the antenna and amount of deterioration in the near field performance of the antenna may be different from each other. For example, when the RFIC 215 transfers a transmission signal with a specified power to the antenna, in a case that the second RF path is selected, compared to a case that the first RF path is selected, strength of an electromagnetic wave measured at a long distance from the antenna is partially decreased, but strength of an electromagnetic wave measured at a relatively short distance from the antenna may be more decreased than that at the long distance.

According to an embodiment, the second RF path may include a portion in which a high-frequency transmission signal transferred from the RFIC 215 is coupled and transferred (e.g., coupling feeding) between two spatially spaced conductive materials (e.g., the antenna-side feeding unit and the transmission line-side feeding unit).

According to an embodiment, an electronic device 101 may set an RF signal to be provided to the patch antennas 224 and 225 (e.g., the antenna radiator) through the second RF path (e.g., an RF path using the coupling feeding) if an external object (e.g., the human body) is close to the electronic device 101 to satisfy a certain criterion, and set the RF signal to be provided to the patch antennas 224 and 225 (e.g., the antenna radiator) through the first RF path (e.g., an RF path using the direct feeding) if the external object (e.g., the human body) is not close to the electronic device 101. Accordingly, the electromagnetic wave occurred in the electronic device 101 may satisfy an APD regulation and/or a SAR regulation by switching so that the RF signal is transferred through an RF path in which a near field performance is relatively low when the external object (e.g., the human body) is close to the electronic device, even though power backoff is not performed. For example, the APD regulation may be satisfied (or complied) without power backoff even though the external object is close to the electronic device using a principle that a measurement value for the APD decreases when the feeding pad (or the feeding point) to which the transmission line is connected in the antenna (e.g., the patch antenna) is farther from a sensing area for the APD.

According to an embodiment, the electronic device 101 may select an RF path (or a feeding scheme) between the RFIC 215 and the patch antennas 224 and 225 based at least in part on strength of power received from a base station and/or strength of transmission power of the electronic device 101. For example, if the electronic device 101 receives a weak electric field according that the electronic device 101 is spaced apart from the base station by a predetermined distance or more, or according to an obstacle, the base station may instruct the electronic device 101 to transmit an uplink signal with a predetermined or more power. For example, based on a determination that the external object (e.g., the human body) is close to (or in contact with) the electronic device 101 and the transmission power of the electronic device 101 satisfies a predefined criterion, the electronic device 101 may provide a current to the antenna using the second RF path (or the coupling feeding). For example, if the external object (e.g., the human body) is close to (or in contact with) the electronic device 101 and the transmission power of the electronic device 101 does not satisfy the predefined criterion, the electronic device 101 may provide the current to the antenna using the first RF path (or the direct feeding). For example, if a received electric field from an external electronic device (e.g., an electronic device 102, an electronic device 104, an electronic device 108, an access point, or the base station) is lower than a specific value, the electronic device 101 may be configured to transmit a signal with designated maximum power. The designated maximum power may be 26dBm if a communication connection corresponding to a second power level is established, and may be 23dBm to 24dBm if a communication connection corresponding to a third power level is established. For example, based on a determination that the external object (e.g., the human body) is close to (or in contact with) the electronic device 101 and the transmission power of the electronic device 101 is designated as the maximum power, the electronic device 101 may provide a current to the antenna using the second RF path (or the coupling feeding). For example, based on a determination that the external object (e.g., the human body) is close to (or in contact with) the electronic device 101 and the transmission power of the electronic device 101 is not designated as the maximum power, the electronic device 101 may provide the current to the antenna using the first RF path (or the direct feeding).

According to an embodiment, if it is determined that the received electric field of the electronic device 101 is lower than a specific value and the external object (e.g., the human body) is close to or in contact with the electronic device 101, the electronic device 101 may provide the current to the antenna using the second RF path (or the coupling feeding).

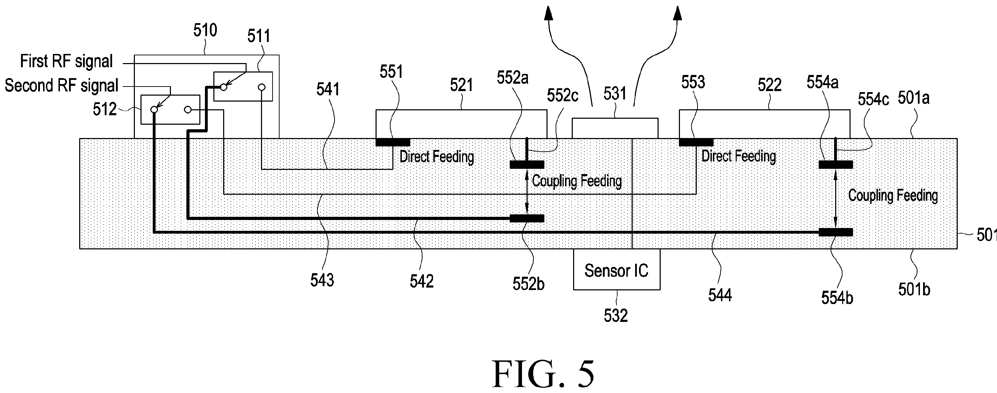

FIG. 5 is a block diagram illustrating an electronic device according to various embodiments.

Referring to FIG. 5, an electronic device (e.g., an electronic device 101 in FIG. 1) may include a switch 510 (e.g., a first switch 511 and a second switch 512), a plurality of antennas including a first antenna 521 (e.g., a first radiator) and a second antenna 522 (e.g., a second radiator), and a sensing circuit. Each of the first antenna 521 and the second antenna 522 may be a component of a set of antennas consisting of a plurality of antennas. The first antenna 521 and the second antenna 522 may correspond to a patch antenna 224 and a patch antenna 225, respectively. However, a kind of antenna is not limited to the patch antenna. The sensing circuit may include a sensing unit 531 (or a sensor) and a sensor IC 532.

The sensing unit 531 may include a sensing pattern. The sensing pattern may be disposed close to the first antenna 521 and/or the second antenna 522. Each sensing pattern may include one or more sensors (e.g., a conductive material) disposed between a radiator (e.g., a patch) and a radiator (e.g., a patch).

The switch 510, the first antenna 521, the second antenna 522, and the sensing unit 531 may be disposed on a first surface 501a of a substrate (e.g., a PCB or an FPCB) 501, and the sensor IC 532 may be disposed on a second surface 501b opposite to the first surface 501a of the substrate 501. The sensing unit 531 may be disposed between the first antenna 521 and the second antenna 522.

A disposition form or a location of each component illustrated in FIG. 5 is illustrative and is not limited thereto. For example, the switch 510 and/or the sensor IC 532 may be disposed on a printed circuit board (e.g., a PCB 210) on which the RFIC 215 is located, and the sensing unit 531 may be disposed on a printed circuit board (e.g., an FPCB 220) on which the first antenna 521 and the second antenna 522 are located.

According to various embodiments, the switch 510 (e.g., the first switch 511 or the second switch 512) may be connected to at least one of first antenna 521 or the second antenna 522 through a first transmission line 541, a second transmission line 542, a third transmission line 543, and a fourth transmission line 544. For example, the first switch 511 may be connected to the first antenna 521 through the first transmission line 541 or the second transmission line 542. The second switch 512 may be connected to the second antenna 522 through the third transmission line 543 or the fourth transmission line 544.

According to an embodiment, the switch 510 (e.g., the first switch 511 or the second switch 512) may be included in a MODEM 211, an IF/RFIC module 213, or an RFFE 217. According to an embodiment, the switch 510 (e.g., the first switch 511 or the second switch 512) may be provided as a separate module.

According to an embodiment, the switch 510 may transfer an RF signal (or a transmission signal, transmission power, or a transmission current) outputted from the RFIC 215 to the first antenna 521 (or the second antenna 522), between the RFIC 215 and the first antenna 521 (or the second antenna 522). For example, the switch 510 (e.g., the first switch 511 or the second switch 512) may refer to at least one of hardware, software, or firmware including a structure capable of selecting one of a plurality of transmission lines based on at least one of whether an external object exists in proximity or strength of transmission power according to a command of a processor (e.g., a processor 120).

According to an embodiment, the first switch 511 may be configured to select one of the first transmission line 541 and the second transmission line 542 which are connected to the first antenna 521. According to an embodiment, the first switch 511 may maintain a connection between another transmission line and the first antenna 521 while transferring the RF signal to a transmission line selected from the first transmission line 541 and the second transmission line 542. According to an embodiment, when one of the first transmission line 541 and the second transmission line 542 is connected to the first antenna 521, the first switch 511 may be configured not to connect the other one to the first antenna 521.

According to various embodiments, one side of the first transmission line 541 may be connected to the first switch 511, and the other side of the first transmission line 541 may be connected to the first antenna 521 through a first feeding pad 551 (or a feeding unit). For example, the first feeding pad 551 may be located on a surface (e.g., the first surface 501a) on which the first antenna 521 of the substrate 501 is disposed. A radio frequency (RF) signal may be transferred from the first switch 511 to the first antenna 521 through the first transmission line 541 and the first feeding pad 551. For convenience of a description, a path on which the RF signal is transmitted from the first switch 511 to the first antenna 521 through the first transmission line 541 and the first feeding pad 551 may be referred to as a 'first RF path.' The first RF path may be referred to as an RF path using 'direct feeding' as it is directly connected to the first feeding pad 551 through the first transmission line 541, but is not limited to such term.

According to various embodiments, one side of the second transmission line 542 may be connected to the first switch 511, and the other side of the second transmission line 542 may be connected to a first coupling pad 552b (e.g., a transmission line-side feeding unit) coupled to a second feeding pad 552a (e.g., an antenna side-feeding unit) connected to the first antenna 521.

According to various embodiments, the second feeding pad 552a may be connected to the first antenna 521 through a first feeding line 552c. The second feeding pad 552a may be directly connected to the first antenna 521 without the first feeding line 552c. For example, the second feeding pad 552a may be located inside the substrate 501 spaced apart by a first distance from a surface (e.g., the first surface 501a) on which the first antenna 521 is disposed. For example, the first coupling pad 552b may be located inside the substrate 501 spaced apart by a second distance from the surface (e.g., the first surface 501a) on which the first antenna 521 is disposed. The second distance may be longer than the first distance. When an RF signal is transferred from the first switch 511 to the second transmission line 542, the RF signal may be transferred to the first antenna 521 through wireless coupling between the first coupling pad 552b and the second feeding pad 552a. For convenience of a description, a path on which the RF signal is transferred from the first switch 511 to the first antenna 521 through the second transmission line 542, the first coupling pad 552b, and the second feeding pad 552a may be referred to as a 'second RF path.' The second RF path may be referred to as an RF path using 'coupling feeding' as the RF signal is transferred by coupling with the second feeding pad 552a through the first coupling pad 552b, but is not limited to such term.

According to various embodiments, at least one of the second feeding pad 552a and/or the first feeding line 552c connecting the second feeding pad 552a to the first antenna 521 may be omitted. For example, the RF signal may be transferred to the first antenna 521 by coupling between the first coupling pad 552b and the first antenna 521. For example, the first coupling pad 552b may have substantially the same area as the first antenna 521.

According to an embodiment, the second switch 512 may be configured to select one of the third transmission line 543 and the fourth transmission line 544 which are connected to the second antenna 522. According to an embodiment, the second switch 512 may maintain a connection between another transmission line and the second antenna 522 while transferring the RF signal to a transmission line selected from the third transmission line 543 and the fourth transmission line 544. According to an embodiment, when one of the third transmission line 543 and the fourth transmission line 544 is connected to the second antenna 522, the second switch 512 may be configured not to connect the other one to the second antenna 522.

According to various embodiments, one side of the third transmission line 543 may be connected to the second switch 512, and the other side of the third transmission line 543 may be connected to the second antenna 522 through a third feeding pad 553 (or a feeding unit). For example, the third feeding pad 553 may be located on a surface (e.g., the first surface 501a) on which the second antenna 522 of the substrate 501 is disposed. An RF signal may be transferred from the second switch 512 to the second antenna 522 through the third transmission line 543 and the third feeding pad 553. For convenience of a description, a path on which the RF signal is transmitted from the second switch 512 to the second antenna 522 through the third transmission line 543 and the third feeding pad 553 may be referred to as a 'third RF path.' The third RF path may be referred to as an RF path using 'direct feeding' as it is directly connected to the third feeding pad 553 through the third transmission line 543, but is not limited to such term.

According to various embodiments, one side of the fourth transmission line 544 may be connected to the second switch 512, and the other side of the fourth transmission line 544 may be connected to a second coupling pad 554b (e.g., a transmission line-side feeding unit) coupled to a fourth feeding pad 554a (e.g., an antenna side-feeding unit) connected to the second antenna 522.

According to various embodiments, the fourth feeding pad 554a may be connected to the second antenna 522 through a second feeding line 554c. The fourth feeding pad 554a may be directly connected to the second antenna 522 without the second feeding line 554c. For example, the fourth feeding pad 554a may be located inside the substrate 501 spaced apart by a first distance from a surface (e.g., the first surface 501a) on which the second antenna 522 is disposed. For example, the second coupling pad 554b may be located inside the substrate 501 spaced apart by a second distance from the surface (e.g., the first surface 501a) on which the second antenna 522 is disposed. The second distance may be longer than the first distance. When an RF signal is transferred from the second switch 512 to the fourth transmission line 544, the RF signal may be transferred to the second antenna 522 through wireless coupling between the second coupling pad 554b and the fourth feeding pad 554a. For convenience of a description, a path on which the RF signal is transferred from the second switch 512 to the second antenna 522 through the fourth transmission line 544, the second coupling pad 554b, and the fourth feeding pad 554a may be referred to as a 'fourth RF path.' The fourth RF path may be referred to as an RF path using 'coupling feeding' as the RF signal is transferred by coupling with the fourth feeding pad 554a through the second coupling pad 554b, but is not limited to such term.

According to various embodiments, at least one of the fourth feeding pad 554a and/or the second feeding line 554c connecting the fourth feeding pad 554a to the second antenna 522 may be omitted. For example, the RF signal may be transferred to the second antenna 522 by coupling between the second coupling pad 554b and the second antenna 522. For example, the second coupling pad 554b may have substantially the same area as the second antenna 522. According to various embodiments, the first distance between the second feeding pad 552a and the first coupling pad 552b may be different from the second distance between the fourth feeding pad 554a and the second coupling pad 554b. For example, the second distance may be longer than the first distance.

According to various embodiments, the sensing circuit (e.g., the sensing unit 531 and the sensor IC 532) may sense whether an object (e.g., a human body) exists in proximity within a sensing area (e.g., whether the object exists or is located within a set first distance). Although the proximity of the object has been described as an example for convenience of a description, it is obvious that sensing of whether the object exists in proximity may include sensing of whether the object is in contact or worn. For example, the sensing unit 531 may transfer, to the sensor IC 532, a signal generated by sensing the object (e.g., the human body) within the sensing area. The sensor IC 532 may generate data (or information) corresponding to a distance from the object (e.g., the human body) based on the signal received from the sensing unit 531.

The data (or the information) corresponding to the distance from the object generated by the sensor IC 532 may be transferred to a processor (e.g., a processor 120 or a communication module 190 in FIG. 1, or a MODEM 211 in FIG. 2). The processor may identify whether the sensed object exists in proximity within a set distance (e.g., the first distance) based on the data (or the information) corresponding to the distance from the object received from the sensor IC 532.

In a case that the sensor IC 532 is a proximity sensor or a grip sensor, if the distance from the sensed object is within the set distance (e.g., the first distance), the sensor IC 532 may transfer data (or information) indicating that the object exists within the set distance to the processor. According to an embodiment, based on the data (or the information) received from the sensor IC 532, the processor may identify whether an external object which is close to (or in contact with) the electronic device 101 (or the first antenna 521 and/or the second antenna 522 of the electronic device 101) exists.

According to an embodiment, the processor may identify whether the electronic device 101 is worn on a user's body (e.g., head) based on the data (or the information) received from the sensor IC 532.

According to various embodiments, the sensing circuit may be implemented in various methods. For example, the sensing circuit may sense the proximity (or contact) of the external object (e.g., the human body) using an antenna (e.g., the first antenna 521 and/or the second antenna 522) without using the separate sensing unit 531. The sensor IC 532 may identify whether the external object (e.g., the human body) exists within the set distance based on a measured value related to return loss of an antenna tuner. Further, the sensing circuit may be implemented by a touch sensor which determines whether a touch exists based on change amount of an electric field. Alternatively, the sensing circuit may sense whether the external object exists in proximity based on reflected amount of an emitted infrared ray.

According to various embodiments, an operation of identifying whether the object (e.g., the human body) exists in proximity may be performed when a designated application (e.g., a call application and a multimedia application) is executed in the electronic device 101. For example, when the user presses an icon (e.g., a button including text or an image) for a call function, the electronic device 101 may identify whether the object exists in proximity. For example, when a communication is connected with an external electronic device (e.g., an electronic device 102, an electronic device 104, an electronic device 108, an access point, or a base station), the electronic device 101 may identify whether the object exists in proximity. For example, when transmission/reception of a signal (e.g., data or voice) with an external electronic device is initiated, the electronic device 101 may identify whether the object exists in proximity.

According to various embodiments, the operation of identifying whether the object (e.g., the human body) exists in proximity may be performed in advance before the designated application is executed in the electronic device 101. For example, determining whether the external object is sensed in connection with establishment of a communication connection may mean that an operation of sensing the external object may be performed before or after the establishment of the communication connection.

According to an embodiment, the operation of identifying whether the object (e.g., the human body) exists in proximity may be periodically performed while the designated application is being executed. According to an embodiment, the operation of identifying whether the object (e.g., the human body) exists in proximity may be stopped when the execution of the designated application is terminated. According to an embodiment, the operation of identifying whether the object (e.g., the human body) exists in proximity may be performed based on determination that a frequency used for a communication with the external electronic device is a designated frequency. For example, the operation of identifying whether the object (e.g., the human body) exists in proximity may be stopped when the frequency used for the communication with the external electronic device is changed from the designated frequency to another frequency.

According to an embodiment, the sensing unit 531 may be disposed at various locations of the electronic device 101. For example, the sensing unit 531 may be disposed at a location where the user grips the electronic device 101 with his or her hand in order to bring an earpiece speaker of the electronic device 101 to his or her ears when the user makes a call. For example, the sensing unit 531 may be disposed around the earpiece speaker of the electronic device 101. For example, the sensing unit 531 may be disposed at a location where the user grips the electronic device 101 with his or her hand in order to use a data communication-related function while looking at a screen of a display module 160.

According to an embodiment, the sensing unit 531 may include a touch sensor or a proximity sensor formed on an outer surface of the electronic device 101.

According to an embodiment, the electronic device 101 may select an RF path using direct feeding for one of the first antenna 521 (e.g., a first radiator or a first patch) and the second antenna 522 (e.g., a second radiator or a second patch), and select an RF path using coupling feeding for the other.

For example, the RF path using the direct feeding may be selected in both the first antenna 521 and the second antenna 522 under a first designated condition, and the RF path using the direct feeding may be selected in the first antenna 521, but the RF path using the coupling feeding may be selected in the second antenna 522 under a second designated condition. The RF path using the coupling feeding may be selected in both the first antenna 521 and the second antenna 522 under a third designated condition, and the RF path using the coupling feeding may be selected in the first antenna 521, but the RF path using the direct feeding may be selected in the second antenna 522 under a fourth designated condition.

The first designated condition, the second designated condition, the third designated condition, and the fourth designated condition may be related to at least one of, for example, a kind of a communication function (e.g., whether it is a call function or a data communication function), a human contact area (e.g., whether a contact area is larger or smaller than a set size), a human contact location (e.g., whether it has been in contact with a face or only a hand), human contact time (e.g., whether it is in contact for more than designated time), strength of transmission power, or a distance from a base station.

According to an embodiment, the sensing unit 531 may include a first sensing unit disposed around a first housing portion (e.g., a housing portion forming a left-side surface) of the electronic device 101 and/or a second sensing unit disposed around a second housing portion (e.g., a housing portion forming a right-side surface). The sensing unit 531 may further include a third sensing unit disposed around the antenna (e.g., the first antenna 521 and/or the second antenna 522) of the electronic device 101. For example, when sensing a specific external object (e.g., the human body) which is close to or in contact with the electronic device 101 through the first sensing unit and/or the second sensing unit, the electronic device 101 may select the RF path using the direct feeding for one of the first antenna 521 and the second antenna 522, and may select the RF path using the coupling feeding for the other. For example, when sensing the specific external object (e.g., the human body) which is close to or in contact with the electronic device 101 through the third sensing unit, the electronic device 101 may select the RF path using the coupling feeding for all of the first antenna 521 and the second antenna 522.

According to various embodiments, the processor (e.g., the processor 120 or the communication module 190 or the MODEM 211 in FIG. 2) may control the first switch 511 to be connected to the first RF path based on identifying that there is no object within the set distance (e.g., the first distance). For example, based on identifying that there is no object within the set distance, the processor may control the first switch 511 so that the first switch 511 is connected to the first transmission line 541 and is not connected to the second transmission line 542. When the first switch 511 is connected to the first transmission line 541, the RF signal transferred to the first transmission line 541 may be transferred to the first antenna 521 through the first feeding pad 551. For example, the RF signal transferred from the first switch 511 to the first transmission line 541 may be transferred to the first antenna 521 through the first RF path using the direct feeding.

According to various embodiments, based on identifying that there is the object within the set distance, the processor (e.g., the processor 120 or the communication module 190 in FIG. 1, or the MODEM 211 in FIG. 2) may control the first switch 511 to be disconnected from the first RF path and connected to the second RF path. For example, based on identifying that there is the object within the set distance, the processor may control the first switch 511 to be changed or switched from a state in which the first switch 511 is connected to the first transmission line 541 to a state in which the first switch 511 is connected to the second transmission line 542. While the first switch 511 is connected to the second transmission line 542, the RF signal transferred to the second transmission line 542 may be transferred to the first antenna 521 through coupling with the first coupling pad 552b and the second feeding pad 552a. For example, the RF signal transferred from the first switch 511 to the second transmission line 542 may be transferred to the first antenna 521 through the second RF path using the coupling feeding.

According to various embodiments, based on identifying that there is no object within the set distance (e.g., the first distance), the processor (e.g., the processor 120 or the communication module 190 in FIG. 1, or the MODEM 211 in FIG. 2) may control the second switch 512 to be connected to the third RF path. For example, based on identifying that there is no object within the set distance, the processor may control the second switch 512 to be connected to the third transmission line 543 and not to be connected to the fourth transmission line 544. While the second switch 512 is connected to the third transmission line 543, the RF signal transferred to the third transmission line 543 may be transferred to the second antenna 522 through the third feeding pad 553. For example, the RF signal transferred from the second switch 512 to the third transmission line 543 may be transferred to the second antenna 522 through the third RF path using the direct feeding.

According to various embodiments, based on identifying that there is the object within the set distance (e.g., the first distance), the processor (e.g., the processor 120 or the communication module 190 in FIG. 1, or the MODEM 211 in FIG. 2) may control the second switch 512 to be disconnected from the third RF path and connected to the fourth RF path. For example, based on identifying that there is the object within the set distance, the processor may control the second switch 512 to be changed or switched from a state in which the second switch 512 is connected to the third transmission line 543 to a state in which the second switch 512 is connected to the fourth transmission line 544. When the second switch 512 is connected to the fourth transmission line 544, the RF signal transferred to the fourth transmission line 544 may be transferred to the second antenna 522 through coupling with the second coupling pad 554b and the fourth feeding pad 554a. For example, the RF signal transferred from the second switch 512 to the fourth transmission line 544 may be transferred to the second antenna 522 through the fourth RF path using the coupling feeding.

According to various embodiments, the second antenna 522, the third transmission line 543, and the fourth transmission line 544 in FIG. 5 may be omitted. According to various embodiments, the two antennas 521 and 522 are illustrated as being connected to the switch 510 in FIG. 5, but may also be connected to three or more antennas. For example, if the switch 510 is connected to the three or more antennas, based on identifying that there is an object within a set distance, the switch 510 may be connected to each antenna through an RF path using the coupling feeding. For example, if the switch 510 is connected to the three or more antennas, based on identifying that there is no object within the set distance, the switch 510 may be connected to each antenna through an RF path using the direct feeding.

According to various embodiments, if the coupling feeding is used, APD may decrease as described in a description of FIG. 4A as a location of the coupling pad (e.g., the first coupling pad 552b or the second coupling pad 554b) is disposed in a direction away from a sensing direction (e.g., a direction in which the first surface 501a of the substrate (e.g., the PCB or the FPCB) 501 faces) than a location of the feeding pad (e.g., the first feeding pad 551 or the third feeding pad 553). As such, as the APD decreases compared to the direct feeding by using the coupling feeding in the RF path, power backoff may not be performed even if the object exists in proximity. Since the electronic device does not perform the power backoff, so the electronic device may transmit the RF signal at a relatively high transmission power, thereby providing a relatively high throughput. However, embodiments of the disclosure are not limited thereto.

According to an embodiment, if a designated condition is satisfied, the electronic device 101 may use the coupling feeding and the power backoff together. The designated condition may include, for example, a case where an area of an external object close to the electronic device 101 is larger than a designated reference, a case where the object exists in proximity for designated time or longer, and a case where the electronic device 101 transmits power equal to or greater than a designated reference for the designated time or longer.

According to an embodiment, if a specific condition is satisfied, the electronic device 101 may adjust magnitude of a power of a signal to be transmitted at least partially simultaneously while using the coupling feeding. Adjustment of magnitude of transmission power may include an operation of selecting one of a plurality of designated power offset values according to a condition, and adding or subtracting the selected power offset value from the magnitude of the transmission power.

According to various embodiments, when an object exists in proximity within the set distance, if the RF signal is transferred through the RF path using the direct feeding without transmitting the RF signal through an RF path using the coupling feeding, for example, about 3.5 dB of power backoff may be required according to an APD criterion.

On the other hand, when the object exists in proximity within the set distance, if the RF signal is transmitted through the RF path using the coupling feeding, a long-range performance (e.g., a passive total radiated power (TRP) and an active TRP) may be degraded, for example, by about 1.5dB due to transmission of the RF signal through coupling, but a performance may be improved by about 2dB relatively by not performing power backoff of 3.5dB, thereby providing a relatively high throughput.

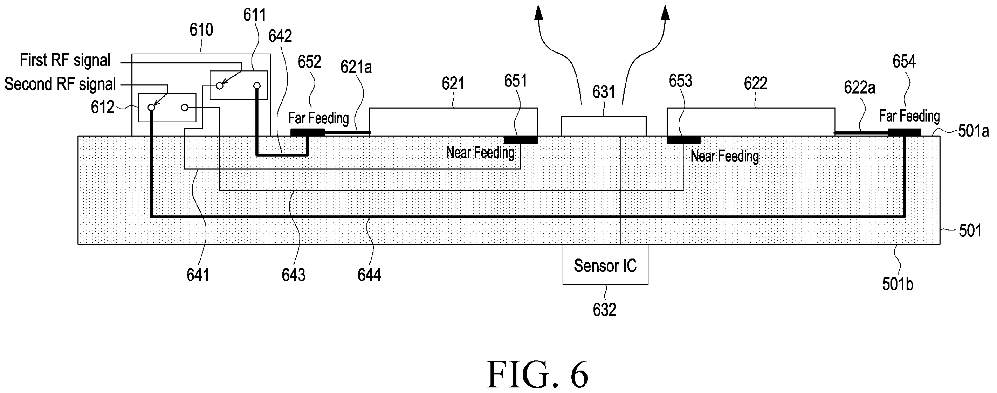

FIG. 6 is a block diagram illustrating an electronic device according to various embodiments.

Referring to FIG. 6, an electronic device (e.g., an electronic device 101 in FIG. 1) may include a switch 610 (e.g., a first switch 611 and a second switch 612), a plurality of antennas including a first antenna 621 (e.g., a first radiator) and a second antenna 622 (e.g., a second radiator), and a sensing circuit. Each of the first antenna 621 and the second antenna 622 may be a component of a set of antennas consisting of a plurality of antennas. The first antenna 621 and the second antenna 622 may correspond to a patch antenna 224 and a patch antenna 225, respectively. However, a kind of antenna is not limited to the patch antenna.

The sensing circuit may include a sensing unit 631 (or sensor) and a sensor IC 632. The sensing unit 631 may include a sensing pattern. The sensing pattern may be disposed close to the first antenna 621 and/or the second antenna 622. Each sensing pattern may include one or more sensors (e.g., a conductive material) disposed between a radiator (e.g., a patch) and a radiator (e.g., a patch). The switch 610, the first antenna 621, the second antenna 622, and the sensing unit 631 may be disposed on a first surface 501a of a substrate (e.g., a PCB or an FPCB) 501, and the sensor IC 632 may be disposed on a second surface 501b opposite to the first surface 501a of the substrate 501. The sensing unit 631 may be disposed between the first antenna 621 and the second antenna 622.

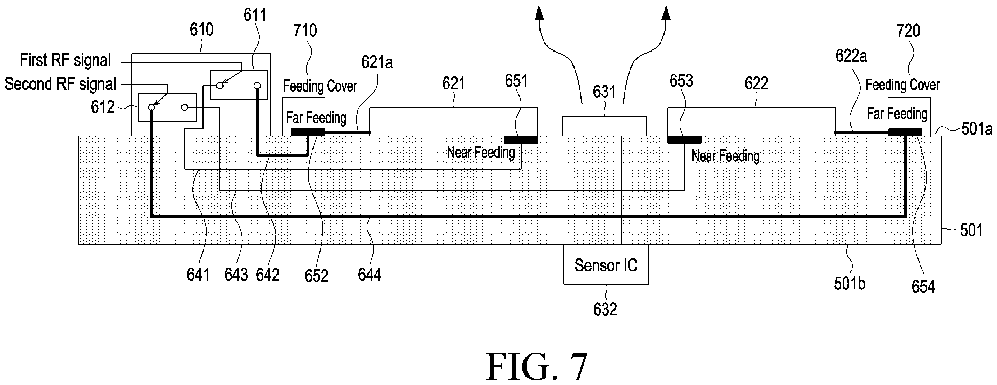

A disposition form or a location of each component illustrated in FIG. 6 is illustrative and is not limited thereto. Components in FIG. 6 and FIG. 7, which will be described below, may be understood with reference to a description of corresponding components included in FIG. 5. For example, the switch 610 and/or the sensor IC 632 may be disposed on a printed circuit board (e.g., a PCB 210) on which the RFIC 215 is located, and the sensing unit 631 may be disposed on a printed circuit board (e.g., an FPCB 220) on which the first antenna 621 and the second antenna 622 are located.

According to various embodiments, the switch 610 (e.g., the first switch 611 or the second switch 612) may be connected to at least one of first antenna 621 or the second antenna 622 through a first transmission line 641, a second transmission line 642, a third transmission line 643, and a fourth transmission line 644. For example, the first switch 611 may be connected to the first antenna 621 through the first transmission line 641 or the second transmission line 642. The second switch 612 may be connected to the second antenna 622 through the third transmission line 643 or the fourth transmission line 644.

According to an embodiment, the switch 610 (e.g., the first switch 611 or the second switch 612) may be included in a MODEM 211, an IF/RFIC module 213, or an RFFE 217. According to an embodiment, the switch 610 (e.g., the first switch 611 or the second switch 612) may be provided as a separate module. According to an embodiment, the switch 610 may transfer an RF signal (or a transmission signal, transmission power, or a transmission current) outputted from the RFIC 215 to the first antenna 621 (or the second antenna 622), between the RFIC 215 and the first antenna 621 (or the second antenna 622). For example, the switch 610 (e.g., the first switch 611 or the second switch 612) may refer to at least one of hardware, software, or firmware including a structure capable of selecting one of a plurality of transmission lines based on at least one of whether an external object exists in proximity or strength of transmission power according to a command of a processor (e.g., a processor 120).

According to an embodiment, the first switch 611 may be configured to select one of the first transmission line 641 and the second transmission line 642 which are connected to the first antenna 621. According to an embodiment, the first switch 611 may maintain a connection between another transmission line and the first antenna 621 while transferring the RF signal to a transmission line selected from the first transmission line 641 and the second transmission line 642. According to an embodiment, when one of the first transmission line 641 and the second transmission line 642 is connected to the first antenna 621, the first switch 611 may be configured not to connect the other one to the first antenna 621.

According to various embodiments, one side of the first transmission line 641 may be connected to the first switch 611, and the other side of the first transmission line 641 may be connected to the first antenna 621 through a first feeding pad 651 (or a feeding unit). For example, the first feeding pad 651 may be located on a surface (e.g., the first surface 501a) on which the first antenna 621 of the substrate 501 is disposed. A radio frequency (RF) signal may be transferred from the first switch 611 to the first antenna 621 through the first transmission line 641 and the first feeding pad 651. For a convenience of a description, a path on which the RF signal is transferred from the first switch 611 to the first antenna 621 through the first transmission line 641 and the first feeding pad 651 may be referred to as a 'first RF path.' Since the first feeding pad 651 is connected relatively close to the first antenna 621 in the first RF path, the first RF path may be referred to as an RF path using 'near feeding', but is not limited to such term.

According to various embodiments, one side of the second transmission line 642 may be connected to the first switch 611, and the other side of the second transmission line 642 may be connected to the first antenna 621 through the second feeding pad 652 (or the feeding unit).

According to various embodiments, the second feeding pad 652 may be connected to the first antenna 621 through a first feeding line 621a. The second feeding pad 652 may be directly connected to the first antenna 621 without the first feeding line 621a. A radio frequency (RF) signal may be transferred from the first switch 611 to the first antenna 621 through the second transmission line 642, the second feeding pad 652, and the first feeding line 621a. A path through which the RF signal is transferred from the first switch 611 to the first antenna 621 through the second transmission line 642, the second feeding pad 652, and the first feeding line 621a may be referred to as a "second RF path" for a convenience of a description. Since the second feeding pad 652 is connected to be relatively spaced apart from the first antenna 621 compared to the first feeding pad 651 in the second RF path, the second RF path may be referred to as an RF path using "far feeding", but is not limited to such term.

According to various embodiments, at least one of the second feeding pad 652a and/or the first feeding line 621a connecting the second feeding pad 652a to the first antenna 621 may be omitted.

According to various embodiments, one side of the third transmission line 643 may be connected to the second switch 612, and the other side of the third transmission line 643 may be connected to the second antenna 622 through a third feeding pad 653 (or a feeding unit). For example, the third feeding pad 653 may be located on a surface (e.g., the first surface 501a) on which the second antenna 622 of the substrate 501 is disposed. An RF signal may be transferred from the second switch 612 to the second antenna 622 through the third transmission line 643 and the third feeding pad 653. For a convenience of a description, a path on which the RF signal is transferred from the first switch 611 to the second antenna 622 through the third transmission line 643 and the third feeding pad 653 may be referred to as a 'third RF path.' Since the third feeding pad 653 is connected relatively close to the second antenna 622 in the third RF path, the third RF path may be referred to as an RF path using 'near feeding', but is not limited to such term.

According to various embodiments, one side of the fourth transmission line 644 may be connected to the second switch 612, and the other side of the fourth transmission line 644 may be connected to the second antenna 622 through the fourth feeding pad 654 (or the feeding unit).

According to various embodiments, the fourth feeding pad 654 may be connected to the second antenna 622 through a second feeding line 622a. The fourth feeding pad 654 may be directly connected to the second antenna 622 without the second feeding line 622a. A radio frequency (RF) signal may be transferred from the second switch 612 to the second antenna 622 through the fourth transmission line 644, the fourth feeding pad 654, and the second feeding line 622a. A path through which the RF signal is transferred from the second switch 612 to the second antenna 622 through the fourth transmission line 644, the fourth feeding pad 654, and the second feeding line 622a may be referred to as a "fourth RF path" for a convenience of a description. Since the fourth feeding pad 654 is connected to be relatively spaced apart from the second antenna 622 compared to the third feeding pad 653 in the fourth RF path, the fourth RF path may be referred to as an RF path using "far feeding", but is not limited to such term.

According to various embodiments, at least one of the fourth feeding pad 654 and/or the second feeding line 622a connecting the fourth feeding pad 654 to the second antenna 622 may be omitted.

According to various embodiments, the sensing circuit (e.g., the sensing unit 631 and the sensor IC 632) may sense whether an object (e.g., a human body) exists in proximity within a sensing area (e.g., whether the object exists or is located within a set first distance). Although the proximity of the object has been described as an example for convenience of a description, it is obvious that sensing of whether the object exists in proximity may include sensing of whether the object is in contact or worn. For example, the sensing unit 631 may transfer, to the sensor IC 632, a signal generated by sensing the object (e.g., the human body) within the sensing area.

The sensor IC 632 may generate data (or information) corresponding to a distance from the object (e.g., the human body) based on the signal received from the sensing unit 631. The data (or the information) corresponding to the distance from the object generated by the sensor IC 632 may be transferred to a processor (e.g., a processor 120 or a communication module 190 in FIG. 1, or a MODEM 211 in FIG. 2).

The processor may identify whether the sensed object exists within a set distance (e.g., the first distance) based on the data (or the information) corresponding to the distance from the object received from the sensor IC 632. In a case that the sensor IC 632 is a proximity sensor or a grip sensor, if the distance from the sensed object is within the set distance (e.g., the first distance), the sensor IC 632 may transfer data (or information) indicating that the object exists within the set distance to the processor.

According to an embodiment, based on the data (or the information) received from the sensor IC 632, the processor may identify whether an external object which is close to (or in contact with) the electronic device 101 (or the first antenna 621 and/or the second antenna 622 of the electronic device 101) exists. According to an embodiment, the processor may identify whether the electronic device 101 is worn on a user's body (e.g., head) based on the data (or the information) received from the sensor IC 632.

According to various embodiments, the sensing circuit may be implemented in various methods. For example, the sensing circuit may sense the proximity (or contact) of the external object (e.g., the human body) using an antenna (e.g., the first antenna 621 and/or the second antenna 622) without using the separate sensing unit 631.

The sensor IC 632 may identify whether the external object (e.g., the human body) exists within the set distance based on a measured value related to return loss of an antenna tuner. Further, the sensing circuit may be implemented by a touch sensor which determines whether a touch exists based on change amount of an electric field. Alternatively, the sensing circuit may sense whether the external object exists in proximity based on reflected amount of an emitted infrared ray.

According to various embodiments, an operation of identifying whether the object (e.g., the human body) exists in proximity may be performed when a designated application (e.g., a call application and a multimedia application) is executed in the electronic device 101. For example, when the user presses an icon (e.g., a button including text or an image) for a call function, the electronic device 101 may identify whether the object exists in proximity. For example, as a call is connected and exchange of a transmission/reception sound is initiated, the electronic device 101 may identify whether the object exists in proximity.

According to various embodiments, the operation of identifying whether the object (e.g., the human body) exists in proximity may be performed in advance before the designated application is executed in the electronic device 101. For example, determining whether the external object is sensed in connection with establishment of a communication connection may mean that an operation of sensing the external object may be performed before or after the establishment of the communication connection.

According to an embodiment, the operation of identifying whether the object (e.g., the human body) exists in proximity may be periodically performed while the designated application is being executed. According to an embodiment, the operation of identifying whether the object (e.g., the human body) exists in proximity may be stopped when the execution of the designated application is terminated.

According to an embodiment, the sensing unit 631 may be disposed at various locations of the electronic device 101. For example, the sensing unit 631 may be disposed at a location where the user grips the electronic device 101 with his or her hand in order to bring an earpiece speaker of the electronic device 101 to his or her ears when the user makes a call. For example, the sensing unit 631 may be disposed around the earpiece speaker of the electronic device 101. For example, the sensing unit 631 may be disposed at a location where the user grips the electronic device 101 with his or her hand in order to use a data communication-related function while looking at a screen of a display module 160.

According to an embodiment, the sensing unit 631 may include a touch sensor or a proximity sensor formed on an outer surface of the electronic device 101.

According to an embodiment, the electronic device 101 may select an RF path using near feeding for one of the first antenna 621 (e.g., a first radiator or a first patch) and the second antenna 622 (e.g., a second radiator or a second patch), and select an RF path using far feeding for the other.

For example, the RF path using the near feeding may be selected in both the first antenna 621 and the second antenna 622 under a first designated condition, and the RF path using the near feeding may be selected in the first antenna 621, but the RF path using the far feeding may be selected in the second antenna 622 under a second designated condition. The RF path using the far feeding may be selected in both the first antenna 621 and the second antenna 622 under a third designated condition, and the RF path using the far feeding may be selected in the first antenna 621, but the RF path using the near feeding may be selected in the second antenna 622 under a fourth designated condition.

The first designated condition, the second designated condition, the third designated condition, and the fourth designated condition may be related to at least one of, for example, a kind of a communication function (e.g., whether it is a call function or a data communication function), a human contact area (e.g., whether a contact area is larger or smaller than a set size), a human contact location (e.g., whether it has been in contact with a face or only a hand), human contact time (e.g., whether it is in contact for more than designated time), strength of transmission power, or a distance from a base station.

According to an embodiment, the sensing unit 531 may include a first sensing unit disposed around a first housing portion (e.g., a housing portion forming a left-side surface) of the electronic device 101 and/or a second sensing unit disposed around a second housing portion (e.g., a housing portion forming a right-side surface). The sensing unit 631 may further include a third sensing unit disposed around the antenna (e.g., the first antenna 621 and/or the second antenna 622) of the electronic device 101. For example, when sensing a specific external object (e.g., the human body) which is close to or in contact with the electronic device 101 through the first sensing unit and/or the second sensing unit, the electronic device 101 may select the RF path using the near feeding for one of the first antenna 621 and the second antenna 622, and may select the RF path using the far feeding for the other. For example, when sensing the specific external object (e.g., the human body) which is close to or in contact with the electronic device 101 through the third sensing unit, the electronic device 101 may select the RF path using the far feeding for all of the first antenna 621 and the second antenna 622.

According to various embodiments, the processor (e.g., the processor 120 or the communication module 190 or the MODEM 211 in FIG. 2) may control the first switch 611 to be connected to the first RF path based on identifying that there is no object within the set distance (e.g., the first distance). For example, based on identifying that there is no object within the set distance, the processor may control the first switch 611 so that the first switch 611 is connected to the first transmission line 641 and is not connected to the second transmission line 642. When the first switch 611 is connected to the first transmission line 641, the RF signal transferred to the first transmission line 641 may be transferred to the first antenna 621 through the first feeding pad 651. For example, the RF signal transferred from the first switch 611 to the first transmission line 641 may be transferred to the first antenna 621 through the first RF path using the near feeding.

According to various embodiments, based on identifying that there is the object within the set distance, the processor (e.g., the processor 120 or the communication module 190 in FIG. 1, or the MODEM 211 in FIG. 2) may control the first switch 611 to be disconnected from the first RF path and connected to the second RF path. For example, based on identifying that there is the object within the set distance, the processor may control the first switch 611 to be changed or switched from a state in which the first switch 611 is connected to the first transmission line 641 to a state in which the first switch 611 is connected to the second transmission line 642. While the first switch 611 is connected to the second transmission line 642, the RF signal transferred to the second transmission line 642 may be transferred to the first antenna 621 through the second feeding pad 652 and/or the first feeding line 621a. For example, the RF signal transferred from the first switch 611 to the second transmission line 642 may be transferred to the first antenna 621 through the second RF path using the far feeding.

According to various embodiments, based on identifying that there is no object within the set distance (e.g., the first distance), the processor (e.g., the processor 120 or the communication module 190 in FIG. 1, or the MODEM 211 in FIG. 2) may control the second switch 612 to be connected to the third RF path. For example, based on identifying that there is no object within the set distance, the processor may control the second switch 612 to be connected to the third transmission line 643 and not to be connected to the fourth transmission line 644. When the second switch 612 is connected to the third transmission line 643, the RF signal transferred to the third transmission line 643 may be transferred to the second antenna 622 through the third feeding pad 653. For example, the RF signal transferred from the second switch 612 to the third transmission line 643 may be transferred to the second antenna 622 through the third RF path using the near feeding.

According to various embodiments, based on identifying that there is the object within the set distance (e.g., the first distance), the processor (e.g., the processor 120 or the communication module 190 in FIG. 1, or the MODEM 211 in FIG. 2) may control the second switch 612 to be disconnected from the third RF path and connected to the fourth RF path. For example, based on identifying that there is the object within the set distance, the processor may control the second switch 612 to be changed or switched from a state in which the second switch 612 is connected to the third transmission line 643 to a state in which the second switch 612 is connected to the fourth transmission line 644. While the second switch 612 is connected to the fourth transmission line 644, the RF signal transferred to the fourth transmission line 644 may be transferred to the second antenna 622 through the fourth feeding pad 654 and/or the second feeding line 622a. For example, the RF signal transferred from the second switch 612 to the fourth transmission line 644 may be transferred to the second antenna 622 through the fourth RF path using the far feeding.

According to various embodiments, the second antenna 622, the third transmission line 643, and the fourth transmission line 644 in FIG. 6 may be omitted.

According to various embodiments, the two antennas 621 and 622 are illustrated as being connected to the switch 610 in FIG. 6, but may also be connected to three or more antennas. For example, if the switch 510 is connected to the three or more antennas, based on identifying that there is an object within a set distance, the switch 610 may be connected to each antenna through an RF path using the far feeding. For example, if the switch 610 is connected to the three or more antennas, based on identifying that there is no object within the set distance, the switch 610 may be connected to each antenna through an RF path using the near feeding.

According to various embodiments, if the far feeding is used, APD may decrease as described in a description of FIG. 4A as a location of a feeding pad (e.g., the second feeding pad 652 or the fourth feeding pad 654) connected to each antenna 621 and 622 is disposed at a relatively greater distance from the antennas 621 and 622 than a location of a feeding pad (e.g., the first feeding pad 651 or the third feeding pad 653) using the near feeding. As such, as the APD decreases compared to the near feeding by using the far feeding in the RF path, power backoff may not be performed even if the object exists in proximity. Since the electronic device does not perform the power backoff, so the electronic device may transmit the RF signal at a relatively high transmission power, thereby providing a relatively high throughput. However, embodiments of the disclosure are not limited thereto.

According to an embodiment, if a designated condition is satisfied, the electronic device 101 may use the far feeding and the power backoff together. The designated condition may include, for example, a case where an area of an external object close to the electronic device 101 is larger than a designated reference, a case where the object exists in proximity for designated time or longer, and a case where the electronic device 101 transmits power equal to or greater than a designated reference for the designated time or longer.

According to an embodiment, if a specific condition is satisfied, the electronic device 101 may adjust magnitude of a power of a signal to be transmitted at least partially simultaneously while using the far feeding. Adjustment of magnitude of transmission power may include an operation of selecting one of a plurality of designated power offset values according to a condition, and adding or subtracting the selected power offset value from the magnitude of the transmission power.

FIG. 7 is a block diagram illustrating an electronic device according to various embodiments.

Referring to FIG. 7, a feeding cover may be disposed on a second feeding pad 652 and/or a fourth feeding pad 654 disposed on an RF path using far feeding in an electronic device in FIG. 6. A detailed description for the same configuration and function as in FIG. 6 will be omitted. For example, a first feeding cover 710 may be disposed on an upper portion of the second feeding pad 652, and a second feeding cover 720 may be disposed on an upper portion of the fourth feeding pad 654. The first feeding cover 710 and the second feeding cover 720 may be disposed to reduce an influence of electromagnetic waves which may increase as a corresponding feeding pad is relatively exposed to an outer surface of a substrate 501 without being covered by an antenna (e.g., a first antenna 621 or a second antenna 622). The first feeding cover 710 and the second feeding cover 720 may be formed of a conductive material. The first feeding cover 710 and the second feeding cover 720 may be connected to a ground of the substrate 501.

According to various embodiments, if the far feeding is used, APD may be lowered as described above in FIG. 4B by disposing a feeding cover (e.g., the first feeding cover 710 or the second feeding cover 720) on a upper portion of a feeding pad (e.g., the second feeding pad 652 or the fourth feeding pad 654) connected to each of the antennas 621 and 622.

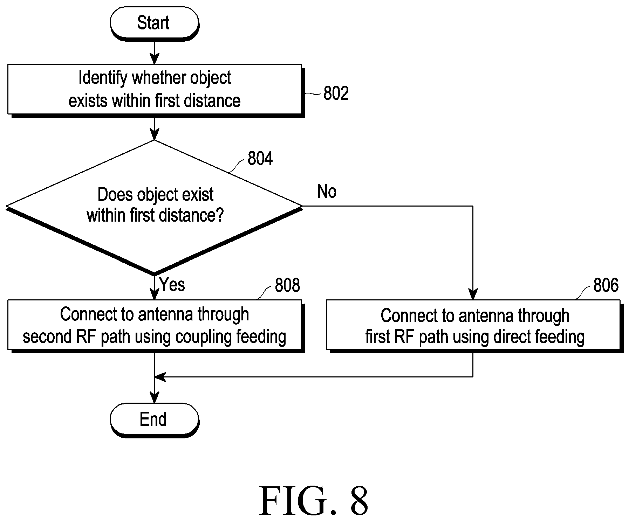

FIG. 8 illustrates a flowchart for describing an operating method of an electronic device according to various embodiments.

In the following embodiment, each operation may be performed sequentially, but is not necessarily performed sequentially. For example, an order of each operation may be changed, and at least two operations may be performed in parallel.

According to an embodiment, an electronic device (e.g., an electronic device 101 in FIG. 1) may include a sensing circuit (e.g., a sensing unit 531 and a sensor IC 532), antennas 521 and 522 configured to radiate an RF signal, and a switch 510 (e.g., a first switch 511 and a second switch 512). The electronic device may include memory (e.g., memory 130 in FIG. 1) which stores instructions and includes one or more storage media. The electronic device may include at least one processor (e.g., a processor 120 or a communication module 190 in FIG. 1 or a MODEM 211 in FIG. 2) which includes processing circuitry. The instructions, when executed by the at least one processor individually or collectively, may cause the electronic device to perform at least one operation.

According to various embodiments, the electronic device 101 (e.g., at least one of the processor 120 or the communication module 190, or the MODEM 211 in FIG. 2) may identify whether an object exists within a first distance through the sensing circuit in operation 802. For example, the electronic device 101 may identify whether a specific external object (e.g., a human body) is close to (e.g., in contact with) the electronic device 101.

According to various embodiments, if it is not identified that the object exists within the first distance as a result of the identification in operation 804 (Operation 804-No), the electronic device 101 may control the switch to be connected to the antenna through a first RF path using direct feeding in operation 806. The first RF path may correspond to a first RF path in FIG. 5 or a third RF path in FIG. 5. For example, if the specific external object (e.g., the human body) is not close to (e.g., in contact with) the electronic device 101, the electronic device 101 may select an RF path using the direct feeding from an RF path using the direct feeding and an RF path using coupling feeding. The electronic device 101 may provide the antenna with transmission current through the selected RF path.

According to various embodiments, when it is identified that the object exists within the first distance as a result of the identification in operation 804 (Operation 804-Yes), the electronic device 101 may control the switch to be connected to the antenna through a second RF path using the coupling feeding in operation 808. The second RF path may correspond to a second RF path in FIG. 5 or a fourth RF path in FIG. 5. For example, the electronic device 101 may select an RF path using the coupling feeding from among an RF path using the direct feeding and an RF path using the coupling feeding, based at least in part on the determination that the specific external object (e.g., the human body) is close to the electronic device 101.

According to an embodiment, if the specific external object (e.g., the human body) is close to the electronic device 101 and magnitude of a transmission power of the electronic device 101 satisfies a designated criterion, the electronic device 101 may select the RF path using the coupling feeding from among the RF path using the direct feeding and the RF path using the coupling feeding. The electronic device 101 may provide the antenna with the transmission current through the selected RF path.

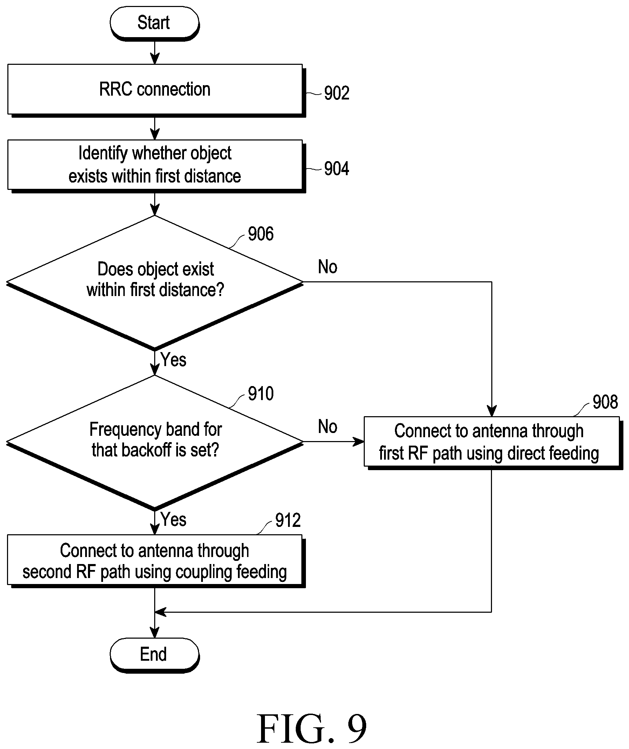

FIG. 9 illustrates a flowchart for describing an operating method of an electronic device according to various embodiments.

In the following embodiment, each operation may be performed sequentially, but is not necessarily performed sequentially. For example, an order of each operation may be changed, and at least two operations may be performed in parallel.

According to an embodiment, an electronic device (e.g., an electronic device 101 in FIG. 1) may include a sensing circuit (e.g., a sensing unit 531 and a sensor IC 532), antennas 521 and 522 configured to radiate an RF signal, and a switch 510 (e.g., a first switch 511 and a second switch 512). The electronic device may include memory (e.g., memory 130 in FIG. 1) which stores instructions and includes one or more storage media. The electronic device may include at least one processor (e.g., a processor 120 or a communication module 190 in FIG. 1 or a MODEM 211 in FIG. 2) which includes processing circuitry. The instructions, when executed by the at least one processor individually or collectively, may cause the electronic device to perform at least one operation.

According to various embodiments, the electronic device 101 (e.g., at least one of the processor 120 or the communication module 190, or the MODEM 211 in FIG. 2) may maintain a radio resource control (RRC) connected state in operation 902.

According to various embodiments, in operation 904, the electronic device 101 may identify whether an object exists within a first distance through the sensing circuit in the RRC connected state (or a call connection state). For example, the electronic device 101 may identify whether a specific external object (e.g., a human body) is close to (e.g., in contact with) the electronic device 101.

According to various embodiments, if it is not identified that the object exists within the first distance as a result of the identification in operation 906 (Operation 906-No), the electronic device 101 may control the switch to be connected to the antenna through a first RF path using direct feeding in operation 908. The first RF path may correspond to a first RF path in FIG. 5 or a third RF path in FIG. 5. For example, if the specific external object (e.g., the human body) is not close to (e.g., in contact with) the electronic device 101, the electronic device 101 may select an RF path using the direct feeding from an RF path using the direct feeding and an RF path using coupling feeding. The electronic device 101 may provide the antenna with transmission current through the selected RF path.

According to various embodiments, if it is identified that the object exists within the first distance in operation 906 (Operation 906-Yes), the electronic device 101 may identify whether a current frequency band corresponds to a designated frequency band in operation 910. For example, the designated frequency band may correspond to a frequency band (e.g., 6 GHz to 60 GHz) set to apply power backoff according to an APD criterion.

According to various embodiments, in operation 910, if it is identified that the current frequency band corresponds to the designated frequency band (Operation 910-Yes), the electronic device 101 may control the switch to be connected to the antenna through a second RF path using coupling feeding in operation 912. The second RF path may correspond to a second RF path in FIG. 5 or a fourth RF path in FIG. 5. For example, if it is identified that the current frequency band corresponds to the designated frequency band, the electronic device 101 may select an RF path using the coupling feeding from among an RF path using the direct feeding and the RF path using the coupling feeding.

According to an embodiment, if the specific external object (e.g., the human body) is close to the electronic device 101, the current frequency band corresponds to the frequency band set to apply the power backoff, the designated frequency band may correspond to a frequency band (e.g., 6 GHz to 60 GHz) set to apply power backoff, and magnitude of a transmission power of the electronic device 101 satisfies a designated criterion, the electronic device 101 may select the RF path using the coupling feeding from among the RF path using the direct feeding and the RF path using the coupling feeding. The electronic device 101 may provide the antenna with the transmission current through the selected RF path.

According to various embodiments, in operation 910, if it is identified that the current frequency band does not correspond to the designated frequency band (Operation 910-No), the electronic device 101 may control the switch to be connected to the antenna through the first RF path using the direct feeding in operation 908. The first RF path may correspond to the first RF path in FIG. 5 or the third RF path in FIG. 5. For example, even if the specific external object (e.g., the human body) is close to the electronic device 101 but the current frequency band does not correspond to the designated frequency band, the electronic device 101 may select the RF path using the direct feeding from among the RF path using the direct feeding and the RF path using the coupling feeding. The electronic device 101 may provide the antenna with the transmission current through the selected RF path.

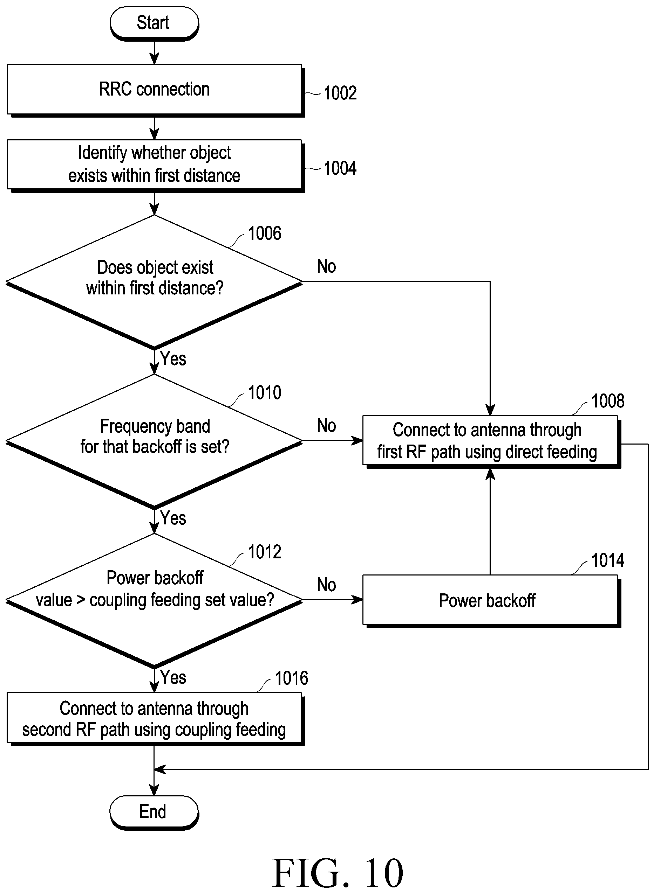

FIG. 10 illustrates a flowchart for describing an operating method of an electronic device according to various embodiments.

In the following embodiment, each operation may be performed sequentially, but is not necessarily performed sequentially. For example, an order of each operation may be changed, and at least two operations may be performed in parallel.

According to an embodiment, an electronic device (e.g., an electronic device 101 in FIG. 1) may include a sensing circuit (e.g., a sensing unit 531 and a sensor IC 532), antennas 521 and 522 configured to radiate an RF signal, and a switch 510 (e.g., a first switch 511 and a second switch 512). The electronic device may include memory (e.g., memory 130 in FIG. 1) which stores instructions and includes one or more storage media. The electronic device may include at least one processor (e.g., a processor 120 or a communication module 190 in FIG. 1 or a MODEM 211 in FIG. 2) which includes processing circuitry. The instructions, when executed by the at least one processor individually or collectively, may cause the electronic device to perform at least one operation.

According to various embodiments, the electronic device 101 (e.g., at least one of the processor 120 or the communication module 190, or the MODEM 211 in FIG. 2) may maintain an RRC connected state in operation 1002.

According to various embodiments, in operation 1004, the electronic device 101 may identify whether an object exists within a first distance through the sensing circuit in the RRC connected state (or a call connection state). For example, the electronic device 101 may identify whether a specific external object (e.g., a human body) is close to (e.g., in contact with) the electronic device 101.

According to various embodiments, if it is not identified that the object exists within the first distance as a result of the identification in operation 1006 (Operation 1006-No), the electronic device 101 may control the switch to be connected to the antenna through a first RF path using direct feeding in operation 1008. The first RF path may correspond to a first RF path in FIG. 5 or a third RF path in FIG. 5. For example, if the specific external object (e.g., the human body) is not close to (e.g., in contact with) the electronic device 101, the electronic device 101 may select an RF path using the direct feeding from an RF path using the direct feeding and an RF path using coupling feeding. The electronic device 101 may provide the antenna with transmission current through the selected RF path.

According to various embodiments, if it is identified that the object exists within the first distance in operation 1006 (Operation 1006-Yes), the electronic device 101 may identify whether a current frequency band corresponds to a designated frequency band in operation 1010. For example, the designated frequency band may include a frequency band for which apply power backoff is set according to an APD criterion.

According to various embodiments, in operation 1010, if it is identified that the current frequency band does not correspond to the designated frequency band (Operation 1010-No), the electronic device 101 may control the switch to be connected to the antenna through the first RF path using the direct feeding in operation 1008. The first RF path may correspond to the first RF path in FIG. 5 or the third RF path in FIG. 5. For example, even if the specific external object (e.g., the human body) is close to the electronic device 101 but the current frequency band does not correspond to the designated frequency band, the electronic device 101 may select the RF path using the direct feeding from among the RF path using the direct feeding and the RF path using the coupling feeding. The electronic device 101 may provide the antenna with the transmission current through the selected RF path.

According to various embodiments, in operation 1010, if it is identified that the current frequency band corresponds to the designated frequency band (Operation 1010-Yes), the electronic device 101 may identify whether a power backoff value exceeds a set value related to the coupling feeding in operation 1012. The power backoff value may correspond to a value for reducing a power in the electronic device if an APD condition is satisfied according to the APD criterion.

The set value related to the coupling feeding may correspond to an antenna performance (e.g., a TRP) which is lowered if an RF path is changed from the direct feeding to the coupling feeding. For example, when the power backoff value is set to 3.5dB, if an object is close to the electronic device and the electronic device satisfies the APD condition, the electronic device may reduce a transmission power by 3.5dB. The set value related to the coupling feeding may be set as a TRP difference value between the direct feeding and the coupling feeding measured per channel at each frequency as shown in Table 2 to be described later. For example, if the power backoff value is 3.5dB and the set value related to the coupling feeding is 1.5dB, the electronic device 101 may identify that the power backoff value exceeds the set value related to the coupling feeding. In this case, even when switching from the direct feeding to the coupling feeding, since a loss of an antenna performance is smaller than a power value which is reduced by the power backoff, switching to the coupling feeding in an APD situation may provide a relatively high throughput.

According to various embodiments, if it is identified that the power backoff value exceeds the set value related to the coupling feeding in operation 1012 (Operation 1012-Yes), the electronic device 101 may control the switch to be connected to the antenna through a second RF path using the coupling feeding in operation 1016. The second RF path may correspond to a second RF path in FIG. 5 or a fourth RF path in FIG. 5. For example, if it is identified that the current frequency band corresponds to the designated frequency band and the power backoff value exceeds the set value related to the coupling feeding, the electronic device 101 may select an RF path using the coupling feeding from among an RF path using the direct feeding and the RF path using the coupling feeding.

According to an embodiment, if the specific external object (e.g., the human body) is close to the electronic device 101, the current frequency band corresponds to the frequency band set to apply the power backoff, the power backoff value exceeds the set value related to the coupling feeding, and magnitude of a transmission power of the electronic device 101 satisfies a designated criterion, the electronic device 101 may select an RF path using the coupling feeding from among an RF path using the direct feeding and an RF path using the coupling feeding. The electronic device 101 may provide the antenna with transmission current through the selected RF path.

According to various embodiments, in operation 1012, if it is identified that the power backoff value does not exceed the set value related to the coupling feeding (Operation 1012-No), the electronic device 101 may backoff a power in operation 1014, and may control the switch to be connected to the antenna through an RF path (e.g., a first RF path in FIG. 5 or a third RF path in FIG. 5) using the direct feeding in operation 1008.

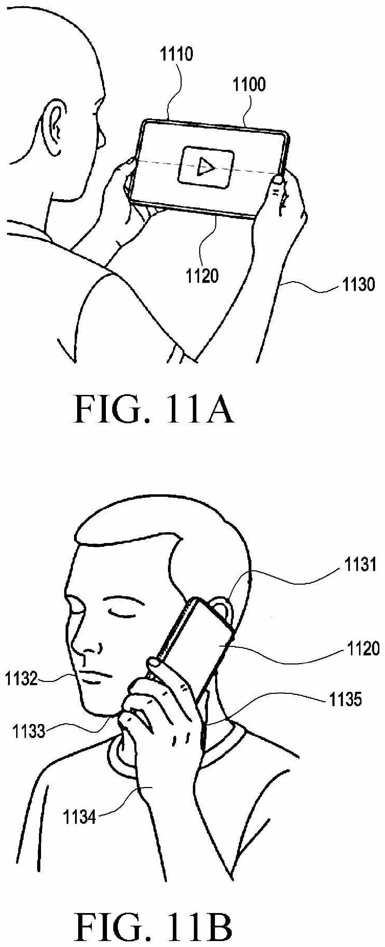

FIG. 11A is a diagram for describing an operation according to a grip type of an electronic device according to various embodiments.

FIG. 11B is a diagram for describing an operation according to a grip type of an electronic device according to various embodiments.

Embodiments of the disclosure may be applied to wearable (e.g., augmented reality (AR) glasses), rollable, foldable, or multi-foldable electronic devices. A foldable electronic device 1100 (e.g., an electronic device 101 in FIG. 1) may include a flexible display including housing portions (e.g., a first housing 1110 and a second housing 1120) which are rotatably connected to each other based on a folding axis and display portions (e.g., a first display area and a second display area) accommodated in the housing portions.

A hinge assembly coupled to each housing and supporting a folding function may be included between the first housing and the second housing. A hinge housing for accommodating at least a portion of the hinge assembly may be disposed between the first housing and the second housing.

The foldable electronic device may include at least one sensor (e.g., an acceleration sensor, a geomagnetic sensor, a gyro sensor, and a hall sensor) which senses a folded state/unfolded state and/or a folding operation/unfolding operation.

The multi-foldable electronic device may include the second housing rotatably connected to the first housing based on a first folding axis. The multi-foldable electronic device may include a third housing rotatably connected to the second housing based on a second folding axis. The multi-fold electronic device may include a flexible display including the first display area, the second display area, and a third display area accommodated in the first housing, the second housing, and the third housing, respectively.

The folding axis of the foldable electronic device may support an in-folding scheme or an out-folding scheme. The in-folding scheme may correspond to a scheme in which corresponding display areas are folded in a direction facing each other, and the out-folding scheme may correspond to a scheme in which the corresponding display areas are folded in a direction not facing each other. The first folding axis of the multi-foldable electronic device may enable out-folding and the second folding axis of the multi-foldable electronic device may enable in-folding.

According to various embodiments, as shown in FIG. 11A, based on identifying that a user grips the electronic device 1100 with his or her hand 1130 and performs a data communication (e.g., multimedia streaming) while the first housing 1110 and the second housing 1120 of the electronic device 1100 are unfolded, the electronic device 1100 may transfer a transmission signal to an antenna using coupling feeding described above. For example, if the user grips the electronic device 1100 with his or her hand 1130 while the electronic device 1100 is unfolded, the body or head of the user may be maintained to be spaced apart from the electronic device 1100.

According to various embodiments, based on identifying that a voice communication (e.g., a call) is performed while the first housing 1110 and the second housing 1120 of the electronic device 1100 are folded as illustrated in FIG. 11B, the electronic device 1100 may transfer a transmission signal to the antenna using coupling feeding and/or power backoff described above. For example, if the user performs the voice call by gripping the electronic device 1100 with his or her hand 1134, a part of the body of the user (e.g., an ear 1131, a mouth 1132, a jaw 1133, the hand 1134, and a finger 1135) may be in contact with or close to the electronic device 1100.

According to various embodiments, the foldable electronic device or the multi-foldable electronic device may transfer a transmission signal transferred to a first antenna (e.g., a first antenna 521 in FIG. 5) using direct feeding, and transfer a transmission signal transferred to a second antenna (e.g., a second antenna 522 in FIG. 5) using coupling feeding, based on identifying that the data communication (e.g., the multimedia streaming) is performed in the unfolded state, as shown in FIG. 11A.

According to various embodiments, the foldable electronic device or the multi- foldable electronic device may transfer all of the transmission signals transferred to the first antenna (e.g., the first antenna 521 in FIG. 5) and the second antenna (e.g., the second antenna 522 in FIG. 5) using coupling feeding based on identifying that the voice communication (e.g., the call) is performed in the folded state, as shown in FIG. 11B.

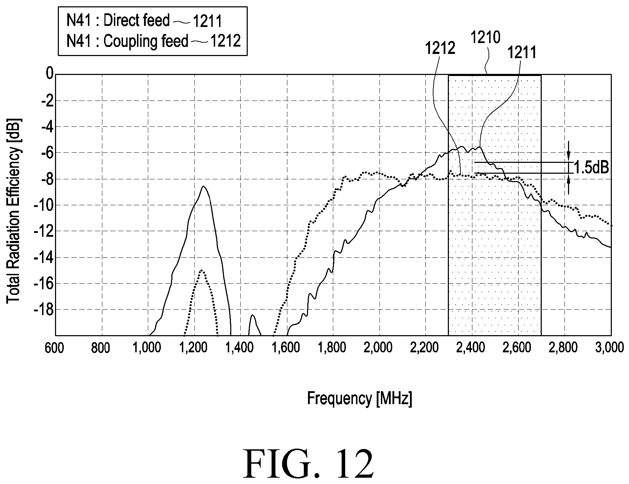

FIG. 12 is a graph illustrating the overall radiation efficiency per frequency according to various embodiments.

Referring to FIG. 12, according to various embodiments, if an RF signal is transferred through an RF path using coupling feeding 1212 in a high-band (HB) frequency band 1210 (e.g., N41), it may be identified that a long-range performance (e.g., a passive total radiated power (TRP) and an active TRP) is degraded due to RF signal transmission through coupling, resulting in a decrease of about 1.5dB in total radiation efficiency compared to direct feeding 1211.

According to an embodiment, referring to Table 2 below, it may be identified that the TRP in the HB frequency band (e.g., N41) decreases slightly in the coupling feeding compared to the direct feeding per channel.

**[Table 2]**

| Frequency band | N41_SA(TDD) | | |
|---|---|---|---|
| Mode | TRP | | |
| Channel (CH) | L(low) | M(medium) | H(high) |
| Direct feeding | 17.83 | 16.74 | 15.99 |
| Coupling feeding | 16.13 | 15.52 | 15.47 |
| Difference value (delta) | -1.70 | -1.22 | -0.52 |

As described above, the value by which the TRP decreases due to the coupling feeding may be set to a value related to the coupling feeding. For example, if a power value reduced by power backoff is 3.5dB and the set value related to the coupling feeding is 1.5dB, loss of antenna performance is less than the power value reduced by power backoff even when switching from the direct feeding to the coupling feeding, switching to the coupling feeding in an APD situation may provide relatively high throughput.

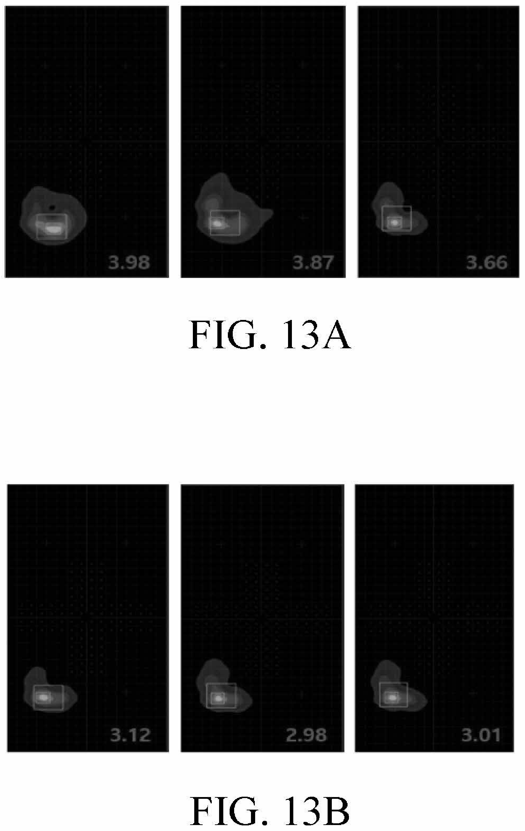

FIG. 13A is a diagram illustrating a SAR in direct feeding according to various embodiments.

FIG. 13B is a diagram illustrating a SAR in direct feeding according to various embodiments.

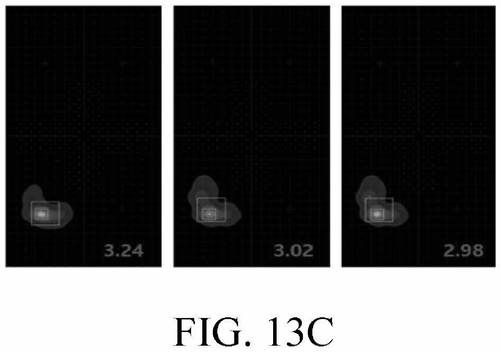

FIG. 13C is a diagram illustrating a SAR in coupling feeding according to various embodiments.

FIG. 13A shows a SAR per channel (e.g., a low (L) channel, a medium (M) channel, and a high (H) channel) in a case that a transmission power is 25.5 dBm in direct feeding.

FIG. 13B illustrates a SAR for each channel in a case that a transmission power is 22.0 dBm by power backoff in direct feeding.

FIG. 13C illustrates a SAR for each channel in a case that a transmission power is 25.5 dBm without power backoff in coupling feeding.

According to various embodiments, experimental results of FIGS. 13A, 13B, and 13C may be summarized as shown in Table 3 below.

**[Table 3]**

| Frequency band | | N41_SA(TDD) | | |
|---|---|---|---|---|
| Mode | | Body 0mm SAR | | |
| Channel (CH) | | L(low) | M(medium) | H(high) |
| Direct feeding | 25.5dBm | 3.98 | 3.87 | 3.66 |
| | 22.0dBm | 3.12 | 2.98 | 3.01 |
| Coupling feeding | 25.5dBm | 3.24 | 3.02 | 2.98 |

Referring to Table 3, it may be seen that a SAR in each channel in a case that the transmission power of the direct feeding is back-off from 25.5 dBm to 22.0 dBm is similar to a SAR in a case that the power back-off in the coupling feeding is not performed.

So, a SAR criterion or an APD criterion may be satisfied by changing a feeding method from the direct feeding to the coupling feeding without excessive backoff by the SAR criterion or the APD criterion when an object exists in proximity.

According to an embodiment, an electronic device (101) may comprise a sensing circuit (531, 532), an antenna (521, 522) configured to radiate an RF signal, and a switch (510).

According to an embodiment, the electronic device may comprise memory (130) storing instructions and comprising one or more storage media.

According to an embodiment, the electronic device may comprise at least one processor (120) comprising processing circuitry.

According to an embodiment, the instructions, when executed by the at least one processor individually or collectively, may cause the electronic device to identify, through the sensing circuit, whether an object exists within a first distance.

According to an embodiment, the instructions, when executed by the at least one processor individually or collectively, may cause the electronic device to, based on identifying that the object does not exist within the first distance, control the switch to be connected to the antenna through a first RF path (541) using a direct feeding.

The direct feeding may be a direct feeding in that the first RF path is a continuous conductive path. The direct feeding may be a direct feeding in that the first RF path is formed of one or more conductive components which are conductively connected to form a continuous conductive path.

According to an embodiment, the instructions, when executed by the at least one processor individually or collectively, may cause the electronic device to, based on identifying that the object exists within the first distance, control the switch to be connected to the antenna through a second RF path (542) using a coupling feeding.

The coupling feeding may be a coupling feeding in that it is an indirect feeding. The coupling feeding may be a coupling feeding in that two or more components of the second RF path are not conductively connected to form a continuous conductive path. The coupling feeding may be a coupling feeding in that it includes an inductive or capacitive coupling between two components of the second RF path.

According to an embodiment, a second feeding pad coupled to the antenna for the coupling feeding may be disposed further away from a sensing direction of the sensing circuit than a first feeding pad for the direct feeding.

According to an embodiment, the antenna may comprise a patch antenna.

According to an embodiment, the instructions, when executed by the at least one processor individually or collectively, may cause the electronic device to identify whether the electronic device is in a radio resource control (RRC) connected state.

According to an embodiment, the instructions, when executed by the at least one processor individually or collectively, may cause the electronic device to identify whether the electronic device is in a radio resource control (RRC) connected state before identifying through the sensing circuit, whether an object exists within a first distance.

According to an embodiment, the instructions, when executed by the at least one processor individually or collectively, may cause the electronic device to, in the RRC connected state, identify, through the sensing circuit, whether the object exists within the first distance. According to an embodiment, the instructions, when executed by the at least one processor individually or collectively, may cause the electronic device to identify, through the sensing circuit, whether the object exists within the first distance in response to identifying that the electronic device is in a RRC connected state. The instructions, when executed by the at least one processor individually or collectively, may cause the electronic device to not attempt to identify, through the sensing circuit, whether an object exists within the first distance in response to identifying that the electronic device is not in an RRC connected state.

According to an embodiment, the instructions, when executed by the at least one processor individually or collectively, may cause the electronic device to identify whether a frequency band of the RF signal corresponds to a set frequency band.

According to an embodiment, the instructions, when executed by the at least one processor individually or collectively, may cause the electronic device to, based on identifying that the frequency band of the RF signal corresponds to the set frequency band and identifying that the object exists within the first distance, control the switch to be connected to the antenna through the second RF path.

According to an embodiment, the instructions, when executed by the at least one processor individually or collectively, may cause the electronic device to identify whether a power back-off value exceeds a set value related to the coupling feeding.

According to an embodiment, the instructions, when executed by the at least one processor individually or collectively, may cause the electronic device to, based on identifying that the power back-off value exceeds the set value related to the coupling feeding, control the switch to be connected to the antenna through the second RF path.

According to an embodiment, the power back-off value may be set based on absorbed power density (APD) criterion.

According to an embodiment, the sensing circuit may comprise a proximity sensor.

According to an embodiment, the sensing circuit may identify whether the object exists within the first distance based on a measurement value related to return loss of an antenna tuner.

According to an embodiment, the sensing circuit may include a sensing pattern, and the sensing pattern may be disposed in proximity to the antenna.

According to an embodiment, an operating method of an electronic device (101) comprising a sensing circuit (531, 532), an antenna (521, 522) configured to radiate a radio frequency (RF) signal, and a switch (510) may comprise identifying, through the sensing circuit, whether an object exists within a first distance.

According to an embodiment, the operating method of the electronic device may comprise, based on identifying that the object does not exist within the first distance, controlling the switch to be connected to the antenna through a first RF path using a direct feeding.

According to an embodiment, the operating method of the electronic device may comprise, based on identifying that the object exists within the first distance, controlling the switch to be connected to the antenna through a second RF path using a coupling feeding.

According to an embodiment, a second feeding pad coupled to the antenna for the coupling feeding may be disposed further away from a sensing direction of the sensing circuit than a first feeding pad for the direct feeding.

According to an embodiment, the antenna may comprise a patch antenna.

According to an embodiment, the operating method of the electronic device may comprise identifying whether the electronic device is in a radio resource control (RRC) connected state.

According to an embodiment, the operating method of the electronic device may comprise, in the RRC connected state, identifying, through the sensing circuit, whether the object exists within the first distance.

According to an embodiment, the operating method of the electronic device may comprise identifying whether a frequency band of the RF signal corresponds to a set frequency band.

According to an embodiment, the operating method of the electronic device may comprise, based on identifying that the frequency band of the RF signal corresponds to the set frequency band and identifying that the object exists within the first distance, controlling the switch to be connected to the antenna through the second RF path.

According to an embodiment, the operating method of the electronic device may comprise identifying whether a power back-off value exceeds a set value related to the coupling feeding.

According to an embodiment, the operating method of the electronic device may comprise, based on identifying that the power back-off value exceeds the set value related to the coupling feeding, controlling the switch to be connected to the antenna through the second RF path.

According to an embodiment, the power back-off value may be set based on absorbed power density (APD) criterion.

According to an embodiment, the sensing circuit may comprise a proximity sensor.

According to an embodiment, the sensing circuit may identify whether the object exists within the first distance based on a measurement value related to return loss of an antenna tuner.

According to an embodiment, a storage medium storing at least one computer-readable instruction may be provided.

According to an embodiment, the at least one instruction, when executed by at least one processor (120) including processing circuitry of an electronic device (101) individually or collectively, may cause the electronic device to perform at least one operation.

According to an embodiment, the at least one operation may comprise identifying, through a sensing circuit (531, 532), whether an object exists within a first distance.

According to an embodiment, the at least one operation may comprise, based on identifying that the object does not exist within the first distance, controlling the switch to be connected to the antenna (521, 522) through a first RF path using a direct feeding.

According to an embodiment, the at least one operation may comprise, based on identifying that the object exists within the first distance, controlling the switch to be connected to the antenna (521, 522) through a second RF path using a coupling feeding.

According to an embodiment, an electronic device (101) may comprise a communication circuit, an antenna configured to receive a transmission signal from the communication circuit through a first signal path or a second signal path, a sensing circuit configured to sense an external object, at least one processor (120) comprising processing circuitry, and memory (130) storing instructions and comprising one or more storage media.

According to an embodiment, the instructions, when executed by the at least one processor individually or collectively, may cause the electronic device to establish a communication connection with an external electronic device through the communication circuit.

According to an embodiment, the instructions, when executed by the at least one processor individually or collectively, may cause the electronic device to, in connection with the establishment of the communication connection, identify whether the external object is sensed through the sensing circuit.

According to an embodiment, the instructions, when executed by the at least one processor individually or collectively, may cause the electronic device to, based at least in part on identifying that the external object is not sensed, transfer the transmission signal to the antenna through the first signal path including a first feeding portion using a physical connection.

The physical connection may comprise a continuous conductive path. The physical connection may be formed of one or more conductive components which are conductively connected to form a continuous conductive path.

According to an embodiment, the instructions, when executed by the at least one processor individually or collectively, may cause the electronic device to, based at least in part on identifying that the external object is sensed, transfer the transmission signal to the antenna through the second signal path including a second feeding portion using a coupled connection. The coupled connection may comprise two or more components which are not conductively connected to form a continuous conductive path. There may be an inductive or capacitive coupling between two components of the coupled connection.

According to an embodiment, the antenna may include a first patch and a second patch which have substantially the same size and are disposed side by side.

According to an embodiment, the first patch may include a first connection point which corresponds to the first feeding portion and is directly connected to a first conductive line which is a part of the first signal path, and a second connection point connected to the second feeding portion.

According to an embodiment, the second patch may be configured to receive at least a part of the transmission signal simultaneously with the first patch through one selected from a third signal path configured substantially the same as the first signal path or a fourth signal path configured substantially the same as the second signal path.

According to an embodiment, if a first condition is satisfied, the first signal path and the third signal path may be selected together.

According to an embodiment, if a second condition is satisfied, the first signal path and the fourth signal path may be selected together.

According to an embodiment, the second feeding portion may include a first conductive pad disposed inside a substrate, separated by a first distance from the antenna in a vertical direction from one surface of the substrate on which the antenna is disposed.

According to an embodiment, the first conductive pad may be directly connected to a second conductive line corresponding to at least a part of the second signal path, and is indirectly connected to the antenna through spatially coupled connection.

According to an embodiment, the second feeding portion may include a second conductive pad disposed to overlap at least a part of the first conductive pad, apart from the antenna by a second distance less than the first distance in the vertical direction.

According to an embodiment, the first conductive pad and the second conductive pad may be disposed to face each other and spaced apart from each other by designated spacing for the coupled connection, and the first conductive pad may be indirectly connected to the antenna through the second conductive pad.

According to an embodiment, the second conductive pad may be directly connected to the antenna through a third conductive line with a width narrower than a width of the second conductive pad.

According to an embodiment, the second signal path may be selected further based on receiving, from the external electronic device, an indication to transfer the transmission signal using a designated maximum power value.

According to an embodiment, the transmission signal may be transferred through a second signal path by applying a designated power offset value to the designated maximum power value, based at least in part on determination that the external object is sensed.

According to an embodiment, the electronic device may further comprise a switch circuit configured to switch according to one selected from the first signal path and the second signal path.

According to an embodiment, an operating method of an electronic device (101) may comprise establishing a communication connection with an external electronic device through a communication circuit.

According to an embodiment, the operating method of the electronic device may comprise, in connection with the establishment of the communication connection, determining whether an external object is sensed through a sensing circuit.

According to an embodiment, the operating method of the electronic device may comprise, based on at least part of identifying that the external object is not sensed, transferring a transmission signal an antenna through a first signal path including a first feeding portion using a physical connection.

According to an embodiment, the operating method of the electronic device may comprise, based on at least part of identifying that the external object is sensed, transferring the transmission signal to the antenna through a second signal path including a second feeding portion using a coupled connection.

According to an embodiment, a storage medium storing at least one computer-readable instruction may be provided.

According to an embodiment, the at least one instruction, when executed by at least one processor (120) including processing circuitry of an electronic device (101) individually or collectively, may cause the electronic device to perform at least one operation.

According to an embodiment, the at least one operation may comprise establishing a communication connection with an external electronic device through a communication circuit.

According to an embodiment, the at least one operation may comprise, in connection with the establishment of the communication connection, determining whether an external object is sensed through a sensing circuit of the electronic device.

According to an embodiment, the at least one operation may comprise, based on at least part of identifying that the external object is not sensed, transferring a transmission signal an antenna of the electronic device through a first signal path including a first feeding portion using a physical connection.

According to an embodiment, the at least one operation may comprise, based on at least part of identifying that the external object is sensed, transferring the transmission signal to the antenna through a second signal path including a second feeding portion using a coupled connection.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as ""connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a sensing circuit (531, 532);
an antenna (521, 522) configured to radiate a radio frequency (RF) signal;
a switch (510);
memory (130) storing instructions and comprising one or more storage media; and
at least one processor (120) comprising processing circuitry,
wherein the instructions, when executed by the at least one processor individually or collectively, cause the electronic device to:
identify, through the sensing circuit, whether an object exists within a first distance;
based on identifying that the object does not exist within the first distance, control the switch to be connected to the antenna through a first RF path using a direct feeding, and
based on identifying that the object exists within the first distance, control the switch to be connected to the antenna through a second RF path using a coupling feeding.

2. The electronic device of claim 1, wherein a second feeding pad coupled to the antenna for the coupling feeding is disposed further away from a sensing direction of the sensing circuit than a first feeding pad for the direct feeding.

3. The electronic device of claim 1 or 2, wherein the instructions, when executed by the at least one processor individually or collectively, cause the electronic device to:
identify whether the electronic device is in a radio resource control (RRC) connected state, and
in the RRC connected state, identify, through the sensing circuit, whether the object exists within the first distance.

4. The electronic device of any one of claims 1 to 3, wherein the instructions, when executed by the at least one processor individually or collectively, cause the electronic device to:
identify whether a frequency band of the RF signal corresponds to a set frequency band, and
based on identifying that the frequency band of the RF signal corresponds to the set frequency band and identifying that the object exists within the first distance, control the switch to be connected to the antenna through the second RF path.

5. The electronic device of any one of claims 1 to 4, wherein the instructions, when executed by the at least one processor individually or collectively, cause the electronic device to:
identify whether a power back-off value exceeds a set value related to the coupling feeding, and
based on identifying that the power back-off value exceeds the set value related to the coupling feeding, control the switch to be connected to the antenna through the second RF path.

6. An electronic device (101) comprising:
a communication circuit;
an antenna configured to receive a transmission signal from the communication circuit through a first signal path or a second signal path;
a sensing circuit configured to sense an external object;
at least one processor (120) comprising processing circuitry; and
memory (130) storing instructions and comprising one or more storage media,
wherein the instructions, when executed by the at least one processor individually or collectively, cause the electronic device to:
establish a communication connection with an external electronic device through the communication circuit,
in connection with the establishment of the communication connection, identify whether the external object is sensed through the sensing circuit,
based at least in part on identifying that the external object is not sensed, transfer the transmission signal to the antenna through the first signal path including a first feeding portion using a physical connection, and
based at least in part on identifying that the external object is sensed, transfer the transmission signal to the antenna through the second signal path including a second feeding portion using a coupled connection.

7. The electronic device of claim 6, wherein the antenna includes a first patch and a second patch which have substantially the same size and are disposed side by side, and
wherein the first patch includes a first connection point which corresponds to the first feeding portion and is directly connected to a first conductive line which is a part of the first signal path, and a second connection point connected to the second feeding portion.

8. The electronic device of claim 7,
wherein the second patch is configured to receive at least a part of the transmission signal simultaneously with the first patch through one selected from a third signal path configured substantially the same as the first signal path or a fourth signal path configured substantially the same as the second signal path.

9. The electronic device of claim 8,
if a first condition is satisfied, the first signal path and the third signal path are selected together, and
if a second condition is satisfied, the first signal path and the fourth signal path are selected together.

10. The electronic device of claim 6, wherein the second feeding portion includes a first conductive pad disposed inside a substrate, separated by a first distance from the antenna in a vertical direction from one surface of the substrate on which the antenna is disposed, and
wherein the first conductive pad is directly connected to a second conductive line corresponding to at least a part of the second signal path, and is indirectly connected to the antenna through spatially coupled connection.

11. The electronic device of claim 10, wherein the second feeding portion includes a second conductive pad disposed to overlap at least a part of the first conductive pad, apart from the antenna by a second distance less than the first distance in the vertical direction.

12. The electronic device of claim 11, wherein the first conductive pad and the second conductive pad are disposed to face each other and spaced apart from each other by designated spacing for the coupled connection, and the first conductive pad is indirectly connected to the antenna through the second conductive pad, or
wherein the second conductive pad is directly connected to the antenna through a third conductive line with a width narrower than a width of the second conductive pad.

13. The electric device of claim 6, wherein the second signal path is selected based on receiving, from the external electronic device, an indication to transfer the transmission signal using a designated maximum power value.

14. The electronic device of claim 13, wherein the transmission signal is transferred through a second signal path by applying a designated power offset value to the designated maximum power value, based at least in part on identifying that the external object is sensed.

15. An operating method of an electronic device (101), the operating method comprising:
establishing a communication connection with an external electronic device through a communication circuit;
in connection with the establishment of the communication connection, identifying whether an external object is sensed through a sensing circuit;
based on at least part of identifying that the external object is not sensed, transferring a transmission signal an antenna through a first signal path including a first feeding portion using a physical connection; and
based on at least part of identifying that the external object is sensed, transferring the transmission signal to the antenna through a second signal path including a second feeding portion using a coupled connection.
